# EUROPEAN PATENT APPLICATION

(11) **EP 1 686 043 A1**
(43) Date of publication of application: **02.08.2006**
(21) Application number: 06001562.5
(22) Date of filing: 25.01.2006
(51) Int. Cl.: B62D 25/08, B62D 25/20

(54) **Floor panel structure for automobile body**

(30) Priority: 27.01.2005 JP 2005019854; 07.03.2005 JP 2005062565
(71) Applicant: Mazda Motor Corporation, Aki-gun, Hiroshima 735-8670 (JP)
(72) Inventor: Kamura, Takanobu, Aki-gun Hiroshima 730-8670 (JP); Murase, Kenji, Aki-gun Hiroshima 730-8670 (JP); Sugihara, Tsuyoshi, Aki-gun Hiroshima 730-8670 (JP)
(74) Representative: Müller-Boré & Partner Patentanwälte

(57) **Abstract**

Disclosed is a floor panel structure for an automobile body, which comprises a floor panel (2, 4, 6, 12) joined to a plurality of frame members (22, 24, 27 to 32, etc.) extending in longitudinal and lateral directions of the automobile body so as to make up an automobile floor. At least a part of the floor panel has a panel zone (S1, S2, S4, S5, S6, S8) surrounded by the frame members. The panel zone includes a high-rigid portion (84) formed by deforming a central region thereof to protrude upward or downward, and a low-rigid portion (86) formed around the high-rigid portion. The high-rigid portion is formed with a concavoconvex element, such as a bead (90). The floor panel structure of the present invention can effectively reduce vibrational energy of a floor panel so as to reduce acoustic radiation from the floor panel.

## Description

### BACKGROUND OF THE INVENTION

### 1. FIELD OF THE INVENTION

The present invention relates to a floor panel structure for an automobile body, and more particularly to a floor panel structure for an automobile body, comprising a floor panel joined to a plurality of frame members extending in longitudinal and lateral directions of the automobile body so as to make up an automobile floor.

### 2. DESCRIPTION OF THE BACKGROUND ART

A phenomenon is known in which vibration from a frame member joined to an engine or a suspension is transmitted to a floor panel, and resulting vibration of the floor panel causes undesirable noise and vibration in a passenger compartment. The root of this problem is vibration of the engine itself and road noise transmitted from the suspension, as a vibration source. Generally, the road noise arises from two factors: tire cavity resonance and suspension resonance. The undesirable vibration transmitted from the engine or suspension typically has a frequency of 400 Hz or less. In particular, road noise arising from tire cavity resonance has a peak frequency of about 250 Hz.

As measures against such nose and vibration, there has been commonly know a technique of attaching a damping member or a vibration isolating material to a floor panel and adjacent components of an automobile body. There has also been known a technique of forming a number of beads in a floor panel and/or increasing a thickness of the floor panel to provide higher rigidity in the floor panel so as to shift a natural frequency of the floor panel to a frequency greater than 400 Hz. This technique is intended to prevent occurrence of resonance in a floor panel at a resonant frequency of a suspension or a cavity resonant frequency of a tire so as to reduce the undesirable noise and vibration.

Further, Japanese Patent Laid-Open Publication No. 06-107235 (Patent Publication 1) discloses an automobile panel structure designed to form in a panel a plurality of convex portions each having a shell structure, and a concave portion extending longitudinally and laterally between the convex portions, to concentrate vibration in the concave portion, and fill the concave portion with a damping material.

While the technique of attaching a damping material or a vibration isolating material to a floor panel and adjacent components of an automobile body can reduce noise and vibration, a weight of an automobile is inevitably increased due to the need for using the damping material or the vibration isolating material in a large amount to cause various adverse affects and a serious problem about cost. Further, while the technique of forming a number of beads in a floor panel and/or increasing a thickness of the floor panel has an advantage of being able to suppress a resonant peak in a low-frequency range, vibration in a high-frequency range is increased to create a new need for using a damping material or a vibration isolating material for suppressing noise and vibration in a high-frequency range, and cause various adverse affects and a serious problem about cost due to increased weight of an automobile.

The automobile body panel structure disclosed in the Patent Publication 1 involves difficulty in reducing noise and vibration for the following reason. When the convex portion is formed in a floor panel, a protruding height of the convex portion has to be set at a limited value capable of preventing interference with an exhaust pipe and other component disposed under and above the floor panel or deterioration in feel when a passenger steps on the floor. The limited height of the convex portion is liable to cause difficulty in forming the convex portion with a sufficient strength against bending, compression and tension. In this case, vibration cannot be concentrated in the concave portion. This precludes the vibration from being effectively reduced. Moreover, lower-order mode vibration occurs in the convex portion itself. This is likely to pose the risk of generating lower-order mode vibration particularly at a frequency of 400 Hz or less and increasing road nose.

### SUMMARY OF THE INVENTION

In view of the above problems in the conventional techniques, it is therefore an object of the present invention to provide an automobile body floor panel structure capable of effectively reducing vibrational energy of a floor panel arising from vibration transmitted from a frame member of an automobile body so as to reduce acoustic radiation from the floor panel.

In order to achieve this object, the present invention provides a floor panel structure for an automobile body, which comprises a floor panel joined to a plurality of frame members extending in longitudinal and lateral directions of the automobile body so as to make up an automobile floor. At least a part of the floor panel has a panel zone surrounded by the frame members. The panel zone includes a high-rigid portion formed by deforming a central region thereof to protrude upward or downward, and a low-rigid portion formed around the high-rigid portion. The high-rigid portion is formed with a concavoconvex element.

In the above floor panel structure of the present invention, the panel zone of the floor panel is provided with the high-rigid portion formed by deforming a central region thereof to protrude upward or downward, and the low-rigid portion formed around the high-rigid portion. Thus, according to a rigidity difference between the high-rigid portion and the low-rigid portion, vibrational energy is concentrated in the low-rigid portion to provide a large vibrational strain in the low-rigid portion. In the low-rigid portion, based on a damping capacity of a material itself constituting the floor panel, vibrational energy is converted to hear energy, so that the vibrational energy in the floor panel is reduced to suppress acoustic radiation from the floor panel. The vibrational energy may be further reduced, for example, by applying or attaching a damping material (or damping member) to the low-rigid portion.

In the above floor panel structure of the present invention, the concavoconvex element formed in the high-rigid portion makes it possible to effectively increase the rigidity of the high-rigid portion without excessively increasing a height of the high-rigid portion. That is, the rigidity of the high-rigid portion can be increased without interference with an exhaust pipe and other component disposed under or above the floor panel and deterioration in feel when a passenger steps on the floor. Thus, the rigidity difference can be reliably obtained to reduce acoustic radiation from the floor panel. In addition, the increased rigidity by means of the concavoconvex element makes it possible to suppress occurrence of low-order mode vibration and acoustic radiation arising from the low-order mode vibration. Thus, the risk of occurrence of low-order mode vibration at a relatively low frequency, for example, of 400 Hz or less can be reduced to prevent increase in road noise. While the low-order mode vibration is apt to occur particularly when the high-rigid portion has a relatively large area, the concavoconvex element formed in the high-rigid portion makes it possible to suppress occurrence of the low-order mode vibration. Based on the above functions, the floor panel structure of the present invention can effectively reduce acoustic radiation from the floor panel to suppress undesirable noise and vibration in a passenger compartment.

### BRIEF DESCRIPTION OF THE DRAWINGS

FIG. 1 is a perspective view showing an automobile underbody having a floor panel structure according to first and second embodiment of the present invention.
FIG. 2 is illustrates an experimental model of a floor panel having a vibration reduction structure, wherein Fig. 2A is a top plan view showing the experimental model, and FIG. 2B is a sectional view taken along the line A-A in Fig. 2A.
FIG 3 is a graph showing an experimental test result obtained from the experimental model in FIG. 2 and an experimental model of a conventional panel.
FIG. 4 is an explanatory fragmentary enlarged top plan view of a vibration mode occurring in a high-rigid portion formed with no concavoconvex element.
FIG 5 illustrates a panel zone S8 having a floor panel structure according to the first embodiment, wherein FIG 5A is an enlarged top plan view showing the panel zone S8, and FIG 5B is a lateral-sectional view taken along the line V-V in FIG. 5A.
FIG. 6 illustrates a panel zone S4 having a floor panel structure according to the first embodiment, wherein FIG 6A is an enlarged top plan view showing the panel zone S4, and FIG. 6B is a lateral-sectional view taken along the line VI-VI in FIG. 6A.
FIG 7 illustrates the panel zones S5 and S6 each having the floor panel structure according to this embodiment, wherein FIG. 7A is an enlarged top plan view showing the panel zones S5 and S6, and FIG 7B is a lateral-sectional view taken along the line VII-VII in FIG 7A.
FIG. 8 is a fragmentary enlarged top plan view showing one example of modification of a concavoconvex element in a high-rigid portion of a floor panel structure according to the first embodiment.
FIG. 9 illustrates the panel zone S1 having a floor panel structure according to a second embodiment of the present invention, wherein FIG 9A is an enlarged top plan view showing the panel zone S1, and FIG. 9B is a lateral-sectional view taken along the line IX-IX in FIG. 9A.
FIG. 10 is a fragmentary enlarged top plan view showing one example of modification of a high-rigid portion of a floor panel structure according to the second embodiment.
FIG 11 is a fragmentary enlarged top plan view showing a high-rigid portion of a floor panel structure according to a third embodiment of the present invention.
FIG 12 is a fragmentary enlarged top plan view showing a high-rigid portion of a floor panel structure according to a fourth embodiment of the present invention.
FIG. 13 is a diagram showing an analytical result of an analytical model as a finite element model after a damping material in an experimental model is removed. In FIG. 13, a region having a higher brightness means that the region has a larger strain.
FIG. 14 is a lateral-sectional view showing a panel zone S10 having a floor panel structure according to a fifth embodiment of the present invention.
**FIG.** 15 is a lateral-sectional view showing panel zones S1 and **S3** having a floor panel structure according to a sixth embodiment of the present invention.
FIG 16 is a lateral-sectional view showing panel zones S7 and S8 having a floor panel structure according to a seventh embodiment of the present invention.

### DESCRIPTION OF THE PREFERRED EMBODIMENTS

With reference to the accompanying drawings, various embodiments of the present invention will now be described.

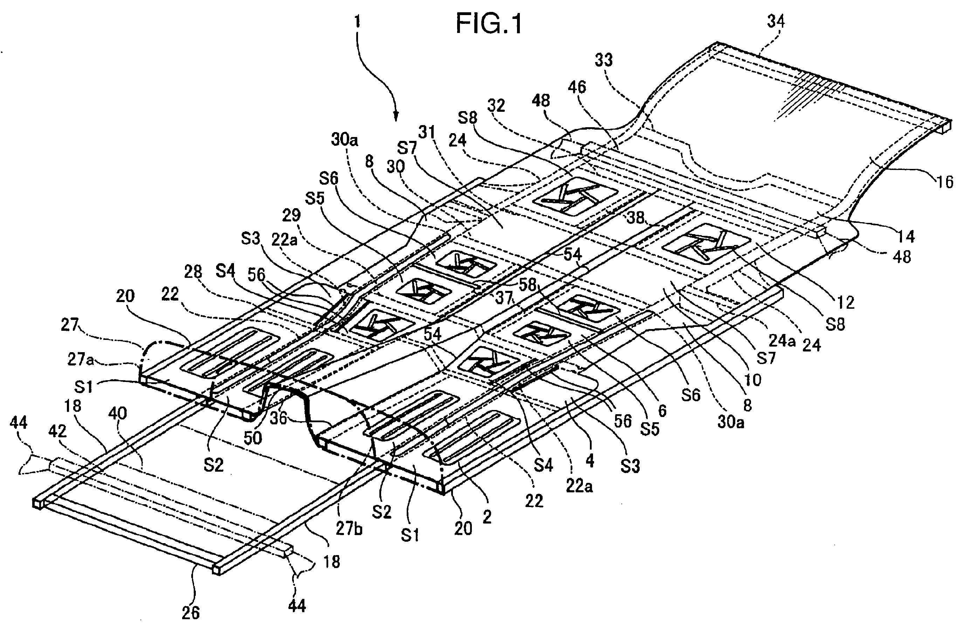

FIG 1 is a perspective view showing an automobile underbody having a floor panel structure according to the embodiments of the present invention. As shown in FIG 1, the automobile underbody 1 comprises a plurality of floor panel sections 2, 4, 6, 8, 10, 12, 14, 16 which collectively form a floor unit of a passenger compartment, and a plurality of frame members connected to these floor panel sections. The frame members includes a pair of front side frames 18, a pair of side sills 20, a pair of floor side frames 22 and a pair of rear side frames 24, each of which extends in a frontward/rearward or longitudinal direction of an automobile body. The frame members further includes first to ninth cross members 26 to 34 each extending in a width or lateral direction of the automobile body, and first to third pairs of tunnel side members 36 to 38 each disposed across the cross members 26 to 34 to extend in the longitudinal direction.

Firstly, the frame members will be described in more detail with reference to FIG. 1. Each of the pair of front side frames 18 has a closed-sectional structure, and they are disposed in a front end region of the automobile underbody 1 to extend in the longitudinal direction in such a manner as to surround an engine compartment from opposite lateral sides thereof. The first cross member 26 is formed in a closed-sectional structure, and joined to respective front ends of the front side frames 18. Further, an engine 40 is mounted on the front side frames 18, and a front suspension cross member 42 is attached to the front side frames 18. A front suspension assembly 44 is attached to the front suspension cross member 42.

The second cross member 27 is disposed along a front edge of the floor unit to extend in the lateral direction, and joined to respective rear ends of the front side frames 18. This second cross member 27 is attached to a downward inclined portion of a dash panel (not shown) partitioning between the passenger and engine compartments. The second cross member 27 comprises a pair of torque boxes 27a each formed in a closed-sectional structure and disposed outward relative to a corresponding one of the front side frames 18, and a dash lower cross member 27b formed in a closed-sectional structure and disposed in sandwiched relation between the front side frames 18.

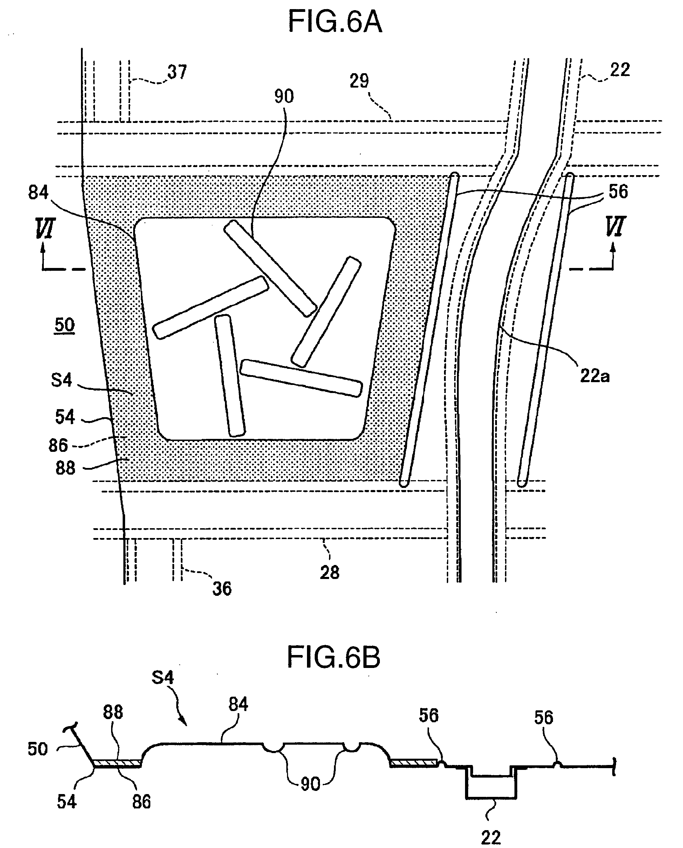

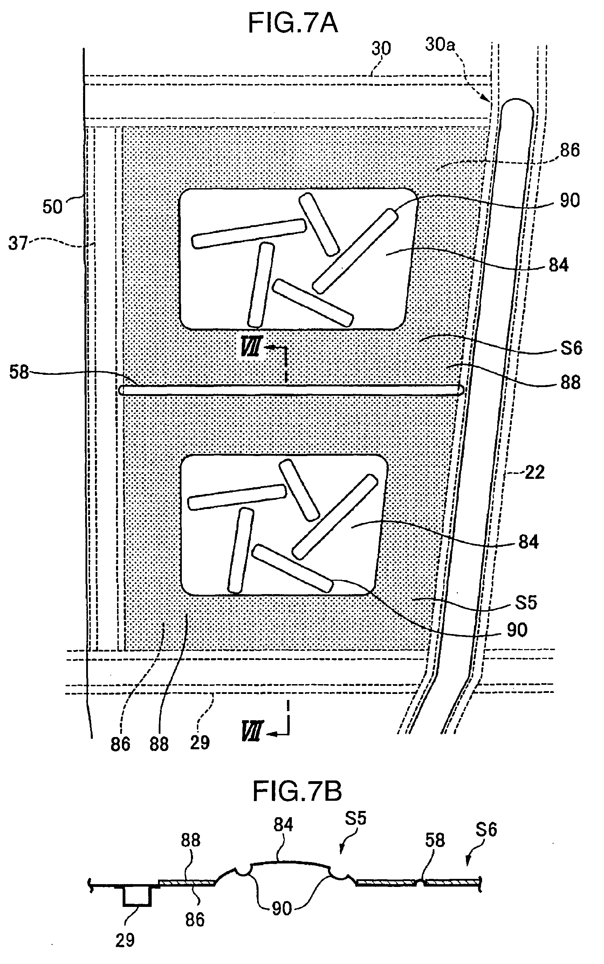

Each of the pair of side sills 20 is disposed along a corresponding one of laterally opposed side edges of a region of the floor unit on the rearward side relative to the second cross member 27, and formed in a closed-sectional structure. Each of the side sills 20 has a front end joined to a corresponding one of laterally opposite ends of the second cross member 27. Each of the pair of floor side frames 22 is formed in a sectionally cup-like shape, and disposed between the side sills 20 to extend in the longitudinal direction. Each of the floor side frames 22 has a front end joined to the rear end of a corresponding one of the front side frames 18 and to the second cross member 27. Each of the floor side frames 22 is formed to extend linearly except that it is curved laterally inward between the third cross member 28 and the fourth cross member 29 (see FIG 6A) and bent laterally at a position where it is joined to the fifth cross member 30 (see FIG 7A).

Each of the pair of rear side frames 24 has a sectionally cup-like shape and extends in the longitudinal direction. Each of the rear side frames 24 has a front end joined to a rear end of a corresponding one of the floor side frames 22. Further, each of the front ends of the rear side frames 24 is joined to a laterally inward side surface of a corresponding one of the side sills 20 through a reinforcing member 24a extending laterally outward. Each of the rear side frames 24 extends up to a rear edge of the floor unit. The seventh cross member 32 and the eighth cross member 33 are joined to each of the rear side frames 24, and a rear suspension cross member 46 is attached to each of the rear side frames 24 at a position between the seventh and eighth cross members 32, 33. A rear suspension assembly 48 is attached to the rear suspension cross member 46.

The third cross member 28 is disposed on the rearward side relative to the second cross member 27 to extend laterally and linearly in parallel relation to the second cross member 27. The third cross member 28 has laterally opposite ends each joined to a corresponding one of the side sills 20. Further, the third cross member 28 has laterally opposite side portions each intersected with and jointed to a corresponding one of the floor side frames 22. The fourth cross member 29 is disposed on the rearward side relative to the third cross member 28 to extend laterally and linearly in parallel relation to the third cross member 28. The fourth cross member 28 has laterally opposite ends each joined to a corresponding one of the side sills 20. Further, the fourth cross member 29 has laterally opposite side portions each intersected with and jointed to a corresponding one of the floor side frames 22. Each of the third and fourth cross members 28, 29 protrudes upward in a laterally approximately-central position of the floor unit where a floor tunnel portion is formed therein.

The fifth to seventh cross members 30, 31, 32 are disposed on the rearward side relative to the fourth cross member 29 to extend laterally and linearly in parallel relation to each other. The fifth cross member 30 has laterally opposite ends each joined to a corresponding one of the floor side frames 22, and each of the sixth and seventh cross member 31, 32 has laterally opposite ends each joined to a corresponding one of the floor side frames 22. The eighth cross member 33 is disposed on the rearward side relative to the seventh cross member 32 to extend laterally. The eighth cross member 33 has a laterally approximately-central portion curved frontward, and laterally opposite ends each joined to a corresponding one of the rear side frames 24.

The ninth cross member 34 is formed in a closed-sectional structure, and disposed on the rearward side relative to the eighth cross member 33 to extend laterally and linearly along the rear edge of the floor unit. The ninth cross member 34 has laterally opposite ends each joined to a corresponding one of the rear side frames 24.

In addition to the front side frames 18, the side sills 20, the floor side frames 22 and the rear side frames 24, the first to third pairs of tunnel side members 36 to 38 are provided as a longitudinally reinforcing member. Specifically, each of the tunnel side members 36 to 38 is formed in a sectionally cup-like shape, and each of the pairs of tunnel side members 36 to 38 are disposed, respectively, along laterally opposed side edges of the floor tunnel portion 50, to extend longitudinally. Each of the first pair of tunnel side members 36 extends linearly from the second cross member 27 to the third cross member 28, and has longitudinally opposite ends joined, respectively, to the second cross member 27 and the third cross member 28. Each of the second pair of tunnel side members 37 extends linearly from the fourth cross member 29 to the fifth cross member 30, and has longitudinally opposite ends joined, respectively, to the fourth cross member 29 and the fifth cross member 30. Each of the third pair of tunnel side members 38 extends linearly from the sixth cross member 31 to the seventh cross member 32, and has longitudinally opposite ends joined, respectively, to the sixth cross member 31 and the seventh cross member 32.

Each of the above sectionally cup-shaped frame members, or each of the floor side frames 22, the rear side frames 24, the third to eighth cross members 28 to 33 and the first to third pairs of tunnel side members 36 to 38, is formed to have an opening facing upward, and respective bottom surfaces of the floor panel sections 2, 4, 6, 8, 10, 12, 14, 16 are joined to respective flanges of these frame members to form an approximately rectangular closed section.

Secondly, the floor panel sections will be described in more detail with reference to FIG 1. As shown in FIG 1, the automobile underbody 1 includes the first to eighth floor panel sections 2, 4, 6, 8, 10, 12, 14, 16 which are integrally formed through a press forming process using a steel sheet. In this embodiment, two lateral regions of the floor unit on opposite sides of the floor tunnel portion 50 are formed symmetrically to one another. Thus, the following description will be made primarily about only one of the lateral regions of the floor unit, and the description about the other portion will be omitted.

The first floor panel section 2 is disposed to cover a space surrounded by the second cross member 27, the pair of side sills 20 and the third cross member 28. The first floor panel section 2 has a laterally approximately-central portion protruding upward and extending longitudinally to form a part of the floor tunnel portion 50. The first floor panel section 2 has a front edge joined to a rear surface of the second cross member 27, and the opposite side edges and a rear edge joined, respectively, to the pair of side sills 20 and the third cross member 28 through bottom surfaces of the edges. Further, the lateral region of the first floor panel section 2 is joined to the first tunnel side member 36 and the floor side frame 22 through a bottom surface thereof.

Thus, two panel zones S1 and S2 surrounded by the frame members 20, 22, 27, 28, 36 are defined in the first floor panel section 2.

The second floor panel section 4 is disposed to cover a space surrounded by the third cross member 28, the pair of side sills 20 and the forth cross member 29. The second floor panel section 4 has a laterally approximately-central portion protruding upward and extending longitudinally to form a part of the floor tunnel portion 50. The second floor panel section 4 has four edges joined, respectively, to the third cross member 28, the pair of side sills 20 and the fourth cross member 29 through bottom surfaces thereof. Further, the lateral region of the second floor panel section 2 is joined to the floor side frame 22 through a bottom surface thereof.

The second floor panel section 4 has a linearly bent portion 54 along each of laterally opposed side edges of the floor tunnel portion 50, and the floor tunnel portion 50 extends upward from this bent portion 54. Further, the second floor panel section 4 is formed with a pair of linear-shaped bead portions 56 on opposite sides of the aforementioned curved portion 22a of the floor side frame 22 to extend along the curved portion 22a. Each of the bead portions 56 is formed to extend from the position of the third cross member 28 to the position of the fourth cross member 29 by partly projecting the second floor panel section 4 itself.

Thus, two panel zones S3 and S4 surrounded by the frame members 20, 22, 28, 29, the bent portion and the bead portions 56 are defined in the second floor panel section 4.

The third floor panel section 6 is disposed to cover a space surrounded by the fourth cross member 29, the floor side frames 22 and the fifth cross member 30. The third floor panel section 6 has a laterally approximately-central portion protruding upward and extending longitudinally to form a part of the floor tunnel portion 50. The third floor panel section 6 has four edges joined, respectively, to the fourth cross member 29, the floor side frames 22 and the fifth cross member 30 through bottom surfaces thereof. Further, the lateral region of the third floor panel section 6 is joined to the second tunnel side member 37 through a bottom surface thereof.

The third floor panel section 6 is formed with a bead portion 58 extending laterally and linearly in parallel relation to the fourth cross member 29 and the fifth cross member 30. The bead portion 58 is formed by partly projecting the third floor panel section 6 itself.

Thus, two panel zones S5 and S6 surrounded by the frame members 22, 29, 30, 37 and the bead portion 58 are defined in the third floor panel section 6.

The fourth floor panel section 8 is disposed on the outward side relative to each of opposite side edges of the third floor panel 6 to extend longitudinally so as to cover a space surrounded by the fourth cross member 29, the side sill 20, the floor side frame 22 and the rear side frame 24, and have a rear edge adjacent to the eighth cross member 33. Each of the fourth floor panel sections 8 is joined to the frame members 20, 22, 24, 29.

The fifth floor panel section 10 is disposed to cover a space surrounded by the fifth cross member 30, the sixth cross member 31, the pair of the floor side frames 22 and the pair of the rear side frames 24. The fifth floor panel section 10 has four edges joined, respectively, to these frame members 22, 24, 30, 31 through bottom surfaces thereof.

The fifth floor panel section 10 has a linearly bent portion 54 along each of laterally opposed side edges of the floor tunnel portion 50, and the floor tunnel portion 50 extends upward from this bent portion 54.

Thus, a panel zone S7 surrounded by the frame members 22, 24, 30, 31 and the bent portion 54 is defined in the fifth floor panel section 10.

The sixth floor panel section 12 is disposed to cover a space surrounded by the sixth cross member 31, the seventh cross member 32, and the pair of the rear side frames 24. The sixth floor panel section 12 has four edges joined, respectively, to these frame members 24, 31, 32 through bottom surfaces thereof. Further, the lateral region of the sixth floor panel section 12 is joined to the third tunnel side member 38 through a bottom surface thereof.

Thus, a panel zone S8 surrounded by the frame members 24, 31, 32, 38 is defined in the sixth floor panel section 12.

The seventh floor panel section 14 is disposed to cover a space surrounded by the seventh cross member 32, the eighth cross member 33, and the pair of the rear side frames 24. The seventh floor panel section 14 has four edges joined, respectively, to these frame members 24, 32, 33 through bottom surfaces thereof.

The eighth floor panel section 16 is disposed to cover a space surrounded by the eighth cross member 33, the ninth cross member 34, and the pair of the rear side frames 24. The eighth floor panel section 16 has four edges joined, respectively, to these frame members 24, 33, 34 through bottom surfaces thereof.

In the above automobile underbody 1, vibrations of the engine 40, the front suspension assembly 44, and the rear suspension assembly 48 are largely transmitted to the pair of the floor side frames 22 and the pair of rear side frames 24 through the front suspension cross member 42, the front side frames 18 and the rear suspension cross member 46, and further transmitted to the cross members 26 to 36, the side sills 20 and the tunnel side members 36 to 38. Finally, these vibrations are transmitted to the first to eighth floor panel sections 2, 4, 6, 8, 10, 12, 14, 16. As mentioned above, the vibration to be transmitted to each of the floor panel sections 2, 4, 6, 8, 10, 12, 14, 16 primarily has a frequency of 400 Hz or less and a peak frequency at about 250 Hz which is road noise arising from tire cavity resonance. If acoustic radiation is generated from the floor panel sections, it becomes a factor causing deterioration in noise and vibration environments of the passenger compartment.

In each of the embodiments of the present invention, a vibration reduction structure is employed in each of the panel zones S1, S2, S4, S5, S6, S8 of the floor panel sections 2, 4, 6, 12 to suppress acoustic radiation which would otherwise be emitted from the panel zones due to vibrations transmitted from the aforementioned frame members. In each of the embodiments, each of the floor panel sections 8, 10, 14, 16 is designed to have the same structure as that in a conventional floor panel.

The vibration reduction structure will be described below. This vibration reduction structure comprises a portion having a given relatively high rigidity (high-rigid portion) and a portion having a given relatively low rigidity (low-rigid portion), which are formed in a given zone of the floor panel section surrounded by the frame members or the like (panel zone). Vibration transmitted to this zone is concentrated in the low-rigid portion according to a rigidity difference between the high-rigid portion and the low-rigid portion, and a large vibrational strain caused by concentration of vibrational energy and a damping capacity of a material (steel sheet) itself constituting the floor panel section induce a conversion from the vibrational energy to heat energy so as to reduce the vibration (obtain a vibration reduction effect). As the result of the reduced vibration in this way, acoustic radiation from the floor panel section is reduced. A damping material may be additionally provided in the low-rigid portion to further reduce the vibration. The vibration reduction structure is designed to reduce acoustic radiation from the floor panel section, based on the above vibration reduction effects.

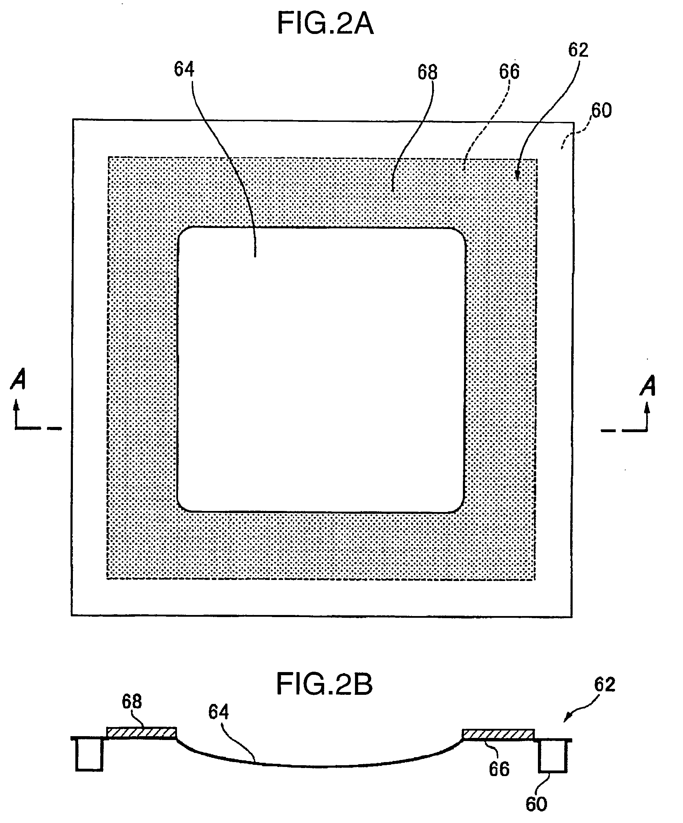

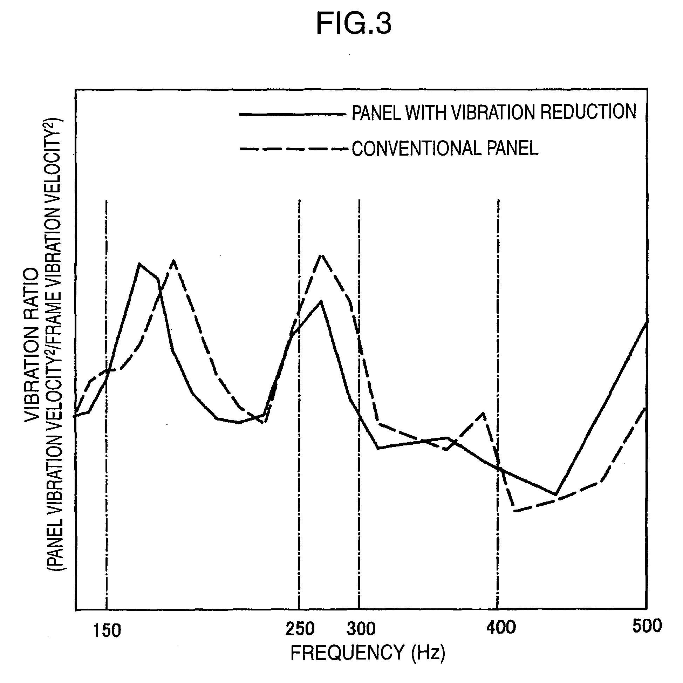

With reference to FIGS. 2 and 3, an experimental test result concerning an acoustic-radiation reduction effect of the above vibration reduction structure will be described below. FIG 2 illustrates an experimental model of a floor panel section having the vibration reduction structure, wherein Fig. 2A is a top plan view showing the model, and FIG. 2B is a sectional view taken along the line A-A in Fig. 2A. FIG 3 is a graph showing an experimental result obtained from the experimental model in FIG. 2 and an experimental model of a conventional floor panel section.

As shown in FIG. 2, the experimental model is formed by attaching a panel 62 having the vibration reduction structure to a sectionally-rectangular experimental frame member 60 having a square shape in top plan view. The panel 62 was prepared through a press forming process using a steel sheet with a thickness of about 0.7 mm to have about 300 mm in length and width of the square shape surrounding by the frame member 60. This panel 62 was formed with a high-rigid portion 64 and an entirely-flat low-rigid portion 66 surrounding the high-rigid portion 64, and a damping member (damping material) 68 was attached onto the low-rigid portion 66.

Further, a steel sheet having the same thickness as that of the steel sheet for the panel 62 was formed into a panel having an entirely flattened surface to obtain an experimental model as a conventional panel section (not shown). A damping member was attached onto this conventional panel in the same amount as that in the panel 62. In this test, a vibrational force having a frequency of 500 Hz or less (white noise) was applied to a portion of the frame member 60 mounting the panel, using a vibration exciter, and a ratio of a vibration level of the panel to a vibration level of the frame member (vibration ratio) was measured.

As seen in FIG 3, as compared with the conventional panel, a vibration ratio of the panel 62 having the vibration reduction structure is lowered in approximately the entire frequency range of 400 Hz or less. In particular, a peak height appearing at about 250 Hz which is road noise arising from tire cavity resonance is largely lowered. This experimental example shows that acoustic radiation from the panel is reduced by employing the vibration reduction structure.

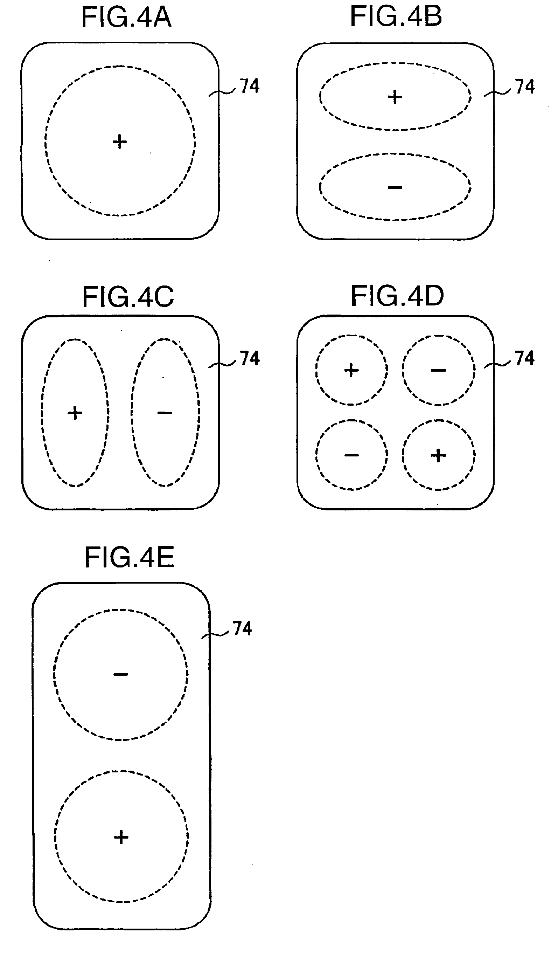

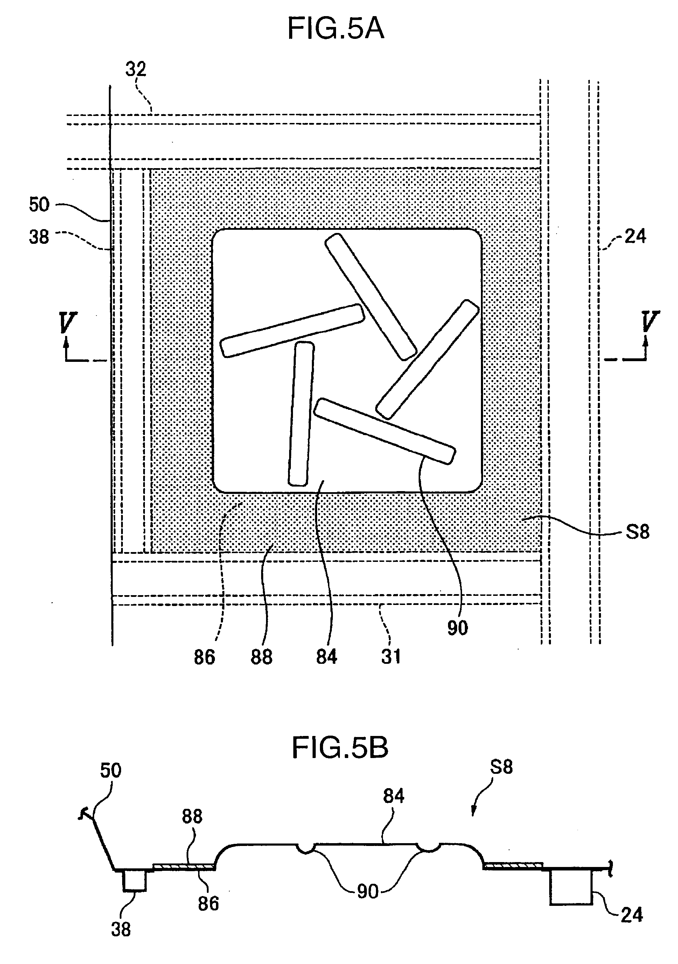

With reference to FIG. 4, a vibration mode to be generated in a high-rigid portion formed without an after-mentioned concavoconvex element (see, for example, the reference numeral 50 in FIG. 5) will be described below. FIG 4 is a fragmentary enlarged top plan view of the high-rigid portion formed with no concavoconvex element. In FIG. 4 (FIGS. 4A to 4E), the area surrounded by the broken line indicates a region having an antinode, and the "+" and "-" indicate that displacements in two antinode regions occur, respectively, on opposite sides in an out-of-plane direction of the high-rigid portion.

Each of the high-rigid portions 74 illustrated in FIG 4 is formed in a rectangular shape without an after-mentioned concavoconvex element (see, for example, the reference numeral 50 in FIG. 5). In cases where the rigidity of the high-rigid portion 74 cannot be sufficiently increased due to difficulty in ensuring a protrusion height in an upward or downward direction, vibration in the 1 x 1 mode (FIG. 4A), the 2 x 1 mode (FIGS. 4B and 4C) or the 2 x 2 mode (FIG 4D) is apt to occur in the high-rigid portion 74. Further, when high-rigid portion 74 has an oblong shape, the 2 x 1 mode (FIG. 4E) is apt to occur therein.

If the above low-order vibration mode occurs at a frequency of 400 Hz or less which causes a problem about road noise or the like, the aforementioned vibration reduction effect is likely to be deteriorated due to road noise radiation arising from such vibration. From this point of view, in the embodiments of the present invention, a vibration reduction structure having a high-rigid portion formed with a concavoconvex element is used in the aforementioned panel zones S1, S2, S4, S5, S6, S8 to prevent the above low-order vibration modes from occurring in the high-rigid portion so as to reliably obtain the vibration reduction effect.

A floor panel structure according to a first embodiment of the present invention will be specifically described below. The floor panel structure according to the first embodiment is used in the panel zone S8 and further in the panel zones S4 to S6.

Firstly, with reference to FIG. 5, the floor panel structure for the panel zone S8 will be described. FIG. 5 illustrates the panel zone S8 having the floor panel structure according to the first embodiment, wherein FIG. 5A is an enlarged top plan view showing the panel zone S8, and FIG. 5B is a lateral-sectional view taken along the line V-V in FIG. 5A.

As shown in FIG 5A, the panel zone S8 is defined by the surrounding frame members 24, 31, 32, 38. Each of the frame members 24, 31, 32, 38 is formed to extend linearly, and the frame members are formed in a rectangular shape where each of the opposed pairs of frame members are disposed in parallel relation to one another.

This panel zone S8 comprises a rectangular-shaped high-rigid portion 84 formed in a central region thereof, and a frame-shaped low-rigid portion 86 surrounding the entire circumference of the high-rigid portion 84.

As shown in FIG. 5B, the high-rigid portion 84 is formed by deforming a floor panel itself in such a manner as to protrude in an upward direction of an automobile body, so as to allow the high-rigid portion 84 to be increased in rigidity. More specifically, the high-rigid portion 84 has a sectional shape where a central region is approximately flat, and a peripheral region extends upward from the low-rigid portion 86 at a discontinuous angle to form a curved shape. Alternatively, the high-rigid portion 84 may be formed to protrude in a downward direction of the automobile body. In contrast, the low-rigid portion 86 is formed to be approximately flat so as to have a lower rigidity than that of the high-rigid portion 84.

Further, as shown in FIG. 5A, the high-rigid portion 84 has four edges each extending linearly to define a boundary with the low-rigid portion 86. Each of the four edges is formed parallel to a corresponding one of the frame members 24, 31, 32, 38 so as to prevent the rigidity of the low-rigid portion 86 from being increased. Specifically, if the boundary between the high-rigid portion 84 and the low-rigid portion 86 is formed in a circular arc shape, the rigidity of the low-rigid portion 86 is increased. In this embodiment, the high-rigid portion 84 is formed in an approximately rectangular shape similar to the shape of the panel zone S8, to allow each of the edges of the high-rigid portion 84 to be in parallel relation to a corresponding one of the frame members 24, 31, 32, 38. This makes it possible to prevent a circular arc-shape region from being formed in the boundary between the high-rigid portion 84 and the low-rigid portion 86, so as to reliably obtain a rigidity difference between the high-rigid portion 84 and the low-rigid portion 86.

Furthermore, as shown in FIGS. 5A and 5B, a damping member (damping material) 88 is applied or attached onto approximately the entire region of the low-rigid portion 86 to effectively reduce vibration concentrated in the low-rigid portion 86. In this embodiment, this damping member consists of an asphalt-based damping material. The damping member 88 is formed in a sheet shape which has a rectangular opening along an outer periphery (boundary with the low-rigid portion 86) of the high-rigid portion 84 and extends to form a frame shape in conformity to the outer periphery of the high-rigid portion 84, and attached onto the low-rigid portion 86. The damping member 88 may be any other suitable damping material, such as an application or coating-type damping material.

As shown in FIG. 5, the high-rigid portion 84 is formed with a concavoconvex element consisting of a plurality of beads 90. In this embodiment, the concavoconvex element formed in the high-rigid portion 84 is provided as a means to increase the rigidity of the high-rigid portion 84 and prevent a low-order vibration mode from occurring in the high-rigid portion 84 particularly at a frequency of 400 Hz or less (see FIG 4), with further enhanced reliability.

Specifically, the concavoconvex element is comprised of a plurality of beads 90 each extending linearly. As shown in FIG. 5B, each of the beads 90 is formed by partly deforming the high-rigid portion 84 to protrude in a downward direction of the automobile body or in a direction opposite to a protruding direction of the high-rigid portion 84.

As shown in FIG. 5A, these beads 90 are arranged around the center of the high-rigid portion 84 in such a manner that adjacent ones of the beads 90 intersect with one another at the same relative angle therebetween, and each of the beads 90 extends outward from a central region of the high-rigid portion 84. Each of the beads 90 extends in a direction inclined relative to a radial direction on the basis of the center of the high-rigid portion 84 by a given angle. In other words, each of the beads 90 is not formed to extend in the radial direction on the basis of the center of the high-rigid portion 84. More specifically, the beads 90 are arranged such that an axis of one of the beads 90 intersects with an axis of an adjacent one of the beads 90, and each of the beads 90 has one end located close to a side surface of an adjacent one of the beads 90, and the other end located close to a corresponding one of the edges (boundary with the low-rigid portion 86) of the high-rigid portion 84. In this case, each of the beads 90 may have one end in contact with an adjacent one of the beads 90 and/or the other end in contact with a corresponding one of the edges of the high-rigid portion 84.

That is, the beads 90 formed in the high-rigid portion 84 are arranged such that at least one of the beads 90 appears in any cross-section taken along a linear line drawn in an arbitrary direction to get across the high-rigid portion 84, or any linear line drawn in an arbitrary direction to get across the high-rigid portion 84 intersects with at least one of the beads 90.

Secondly, with reference to FIGS. 6 and 7, a floor panel structure for the panel zones S4 to S6 will be described. FIG. 6 illustrates the panel zone S4 having the floor panel structure according to this embodiment, wherein FIG. 6A is an enlarged top plan view showing the panel zone S4, and FIG 6B is a lateral-sectional view taken along the line VI-VI in FIG. 6A. FIG. 7 illustrates the panel zones S5 and S6 each having the floor panel structure according to this embodiment, wherein FIG. 7A is an enlarged top plan view showing the panel zones S5 and S6, and FIG 7B is a lateral-sectional view taken along the line VII-VII in FIG. 7A. A fundamental shape and arrangement of a vibration reduction structure employed in each of the panel zones S4 to S6 are the same as those of the vibration reduction structure for the panel zone 8. Thus, the following description will be made primarily about a difference from the panel zone S8.

As shown in FIG. 6A, the panel zone S4 is surrounded by the frame members, or the third cross member 28 and the fourth cross member 29, the bent portion 54 formed along the side edge of the floor tunnel portion 50 to extend linearly, and the linear-shaped bead portion 56 formed along the curved portion 22a of the floor side frame 22, to have a trapezoidal shape. Each of the bent portion 56 and the bead portion 56 serves as a vibration regulation portion for regulating a vibration region in the panel zone S4.

As shown in FIG. 7A, the panel zone S5 and the panel zone S6 have the common bead portion 58, and each of the panel zone S5 and the panel zone S6 is surrounded by the bead portion 58 and the frame members 22, 29, 30, 37 to have a trapezoidal shape. The bead portion 58 serves as a vibration regulation portion for regulating vibration in such a manner as to prevent respective vibrations occurring in the panel zone S5 and the adjacent panel zone S6 from interfering with one another.

As shown in FIGS. 6A and 7A, each of the panel zones S4 to S6 is formed with a high-rigid portion 84 and a frame-shaped low-rigid portion 86 surrounding the entire circumference of the high-rigid portion 84. The high-rigid portion 84 is formed in a trapezoidal shape similar to the shape of each of the panel zones S4 to S6, to allow each edge of the high-rigid portion 84 to be in parallel relation to a corresponding one of the frame members 22, 28, 29, 30, 37, and the bent portion 54 or the bead portion 56, 58. This makes it possible to prevent the rigidity of the low-rigid portion 86 from being increased, so as to reliably obtain a rigidity difference between the high-rigid portion 84 and the low-rigid portion 86.

As shown in FIG. 6B, the high-rigid portion 84 formed in the panel zone S4 has a sectional shape where a central region is approximately flat, and a peripheral region extends upward from the low-rigid portion 86 at a discontinuous angle to form a curved shape. As shown in FIG. 7B, the high-rigid portion 84 formed in the panel zone S5 has a dome-like sectional shape having a curved surface whose height is continuously changed, and the high-rigid portion 84 formed in the panel zone S6 has the same sectional shape although not illustrated. As shown in FIGS. 6B and 7B, the low-rigid portion 86 is formed to be flat, and a damping member 88 is applied or attached onto approximately the entire region thereof, in the same manner as that in the panel zone S8.

Further, as shown in FIGS. 6A and 7A, the high-rigid portion 84 in each of the panel zones S4 to S6 is formed with a concavoconvex element (a plurality of beads 90) in the same manner as that in the panel zone S8, to increase the rigidity of the high-rigid portion 84 and prevent a low-order vibration mode (see FIG 4) from occurring in the high-rigid portion 84 particularly at a frequency of 400 Hz or less, with further enhanced reliability.

As above, the vibration reduction structure in the first embodiment can reduce vibrational energy even in a panel zone surrounded by the frame members and the bent portion 54 or the bead portions 56, 57 serving as the vibration regulation portion, as in the panel zones S4 to S6.

A function and effect of the floor panel structure according to the first embodiment will be described below.

Each of the panel zones S4, S5, S6, S8 in the first embodiment is provided with the high-rigid portion 84 and the low-rigid portion 86 formed around the high-rigid portion 84. Thus, vibrational energy is concentrated in the low-rigid portion 86 according to a rigidity difference between the high-rigid portion 84 and the low-rigid portion 86. Then, in the low-rigid portion 86, a large vibrational strain caused by concentration of vibrational energy and a damping capacity of a material itself constituting the floor panel section induce a conversion from the vibrational energy to hear energy. Further, the damping member 88 attached onto the low-rigid portion 86 is deformed in conjunction with strain in the low-rigid portion 86 to accelerate the conversion from the vibrational energy concentrated in the low-rigid portion 86 to hear energy. This makes it possible to reduce the vibrational energy in each of the panel zones so as to reduce acoustic radiation from each of the panel zones.

The high-rigid portion 84 is formed with the concavoconvex element consisting of the beads 90. This allows the high-rigid portion 84 to have further increased rigidity. While a high-rigid portion 84 designed to have a higher height is effective in increasing the rigidity of the high-rigid portion 84, it is liable to cause a problem about interference with an exhaust pipe or other component disposed under or above the floor panel sections or deterioration in feel when a passenger steps on the floor. In the first embodiment, the concavoconvex element consisting of the beads 90 makes it possible to reliably increase the rigidity of the high-rigid portion 84 while maintaining a height of the high-rigid portion 84 at a value capable of preventing interference with an exhaust pipe etc., and deterioration in feel when a passenger steps on the floor. Particularly, when the panel zone has a large area, a high-rigid portion 84 designed to have a larger area is effective in concentrating vibration in the low-rigid portion 86, and it is desirable to set a height of the high-rigid portion 84 in proportion to the increase in area. In this case, the beads 90 can be formed in the high-rigid portion 84 as in the first embodiment to reliably increase the rigidity of the high-rigid portion 84 while preventing excessive increase in the height of the high-rigid portion 84. This makes it possible to obtain a rigidity difference from the low-rigid portion 86 while preventing interference with an exhaust pipe etc., and deterioration in feel when a passenger steps on the floor, and reduce acoustic radiation from each of the floor panel sections, with further enhanced reliability.

In addition, the increased rigidity by means of the concavoconvex element consisting of the beads 90 makes it possible to prevent the aforementioned low-order mode vibration as shown in FIG. 4 from occurring in the high-rigid portion 84 itself at a relatively low frequency, for example, a frequency of 400 Hz or less. While this low-order mode vibration is likely to occur in a high-rigid portion 84 designed to have a large area, the concavoconvex element can be formed in this high-rigid portion 84 to prevent occurrence of the low-order mode vibration. This makes it possible to prevent increase in road noise due to occurrence of the low-order mode vibration in the high-rigid portion 84.

The beads 90 serving as the concavoconvex element are arranged such that at least one of the beads 90 appears in any cross-section taken along a linear line drawn in an arbitrary direction to get across the high-rigid portion 84. This makes it possible to further reliably prevent occurrence of the low-order mode vibration. More specifically, the beads 90 arranged in this manner are reliably formed in a region having an antinode of the low-order mode vibration as shown in FIG 4, or formed to get across a region undergoing a vibrational bending. Thus, the formation of an antinode can be suppressed. While the high-rigid portion 84 has a region where no bead 90 is formed, it can be said that a specific vibration mode causing a bending around such a region hardly occurs because the beads 90 serving as the concavoconvex element are arranged to prevent such a region from linearly continuing from one edge to another edge of the high-rigid portion 84.

The concavoconvex element is comprised of the beads 90 formed to protrude in an upward or downward direction of the automobile body to increase the rigidity of the high-rigid portion 84. This makes it possible to reliably prevent formation of an antinode of the low-order vibration mode in a simplified structure. Further, each of the beads 90 is formed to protrude in a direction opposite to a direction in which the high-rigid portion 84 protrudes relative to the low-rigid portion 86, or formed within an inner space of the high-rigid portion 84. This makes it possible to prevent interference with an exhaust pipe, etc. In addition, even if the beads 90 are formed in the high-rigid portion 84, an overall height of the high-rigid portion 84 is not increased. Thus, an overall height of the high-rigid portion 84 can be maximized without causing interference with an exhaust pipe or other component disposed under or above the floor panel sections. This makes it possible to maximally increase the rigidity of the high-rigid portion 84 itself without interference with an exhaust pipe or other component.

The plurality of beads 90 are arranged around the center of the high-rigid portion 84 in such a manner that adjacent ones of the beads 90 intersect with one another at the same relative angle therebetween, and each of the beads 90 extends outward from a central region of the high-rigid portion 84. Further, each of the beads 90 extends in a direction inclined relative to a radial direction on the basis of the center of the high-rigid portion 84 by a given angle, or each of the beads 90 is not formed to extend in the radial direction on the basis of the center of the high-rigid portion 84. Furthermore, the beads 90 are arranged such that an axis of one of the beads 90 intersects with an axis of an adjacent one of the beads 90, and each of the beads 90 has one end located close to a side surface of an adjacent one of the beads 90, and the other end located close to a corresponding one of the edges (boundary with the low-rigid portion 86) of the high-rigid portion 84.

In this embodiment, the beads 90 arranged in the above manner make it possible to reliably increase the rigidity of the high-rigid portion 84 over the entire region thereof in a simplified structure, and reliably prevent occurrence of the low-order vibration mode as shown in FIG. 4. That is, the beads 90 arranged in the above manner make it hard to cause a bending at a specific position of the high-rigid portion 84 so as to reliably prevent formation of an antinode in the low-order vibration mode. Further, this arrangement makes it easy to form the beads 90 over the entire region of the high-rigid portion 84, and particularly to form the beads 90 in such a manner that at least one of the beads 90 appears in any cross-section taken along a linear line drawn in an arbitrary direction to get across the high-rigid portion 84.

Thus, the vibration reduction structure in the first embodiment can prevent the low-order vibration mode (see FIG. 4) from occurring in the high-rigid portion 84 particularly at a frequency of 400 Hz or less so as to prevent occurrence of undesirable noise and vibration in a passenger compartment with further enhanced reliability.

In the above arrangement, each of the beads 90 may have one end in contact with an adjacent one of the beads 90 and/or the other end in contact with a corresponding one of the edges of the high-rigid portion 84 to obtain the same effects.

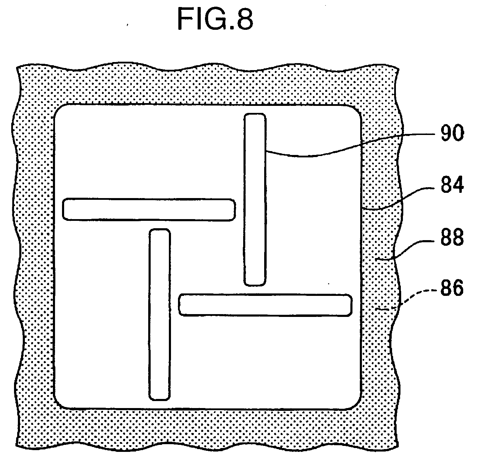

Further, the above effects can be obtained using the concavoconvex element comprised of the plurality of the beads 90 regardless of the number thereof. For example, the number of beads 90 serving as the concavoconvex element may be four as shown in an example of modification illustrated in FIG. 8, or may be three or six or more although not illustrated. In the example of modification illustrated in FIG. 5, each of the four beads 90 extends in a direction inclined relative to a radial direction on the basis of the center of a high-rigid portion 84 by an angle different from that of each of the beads 90 illustrated in FIG. 5. The above effects can be obtained regardless of such a difference in the extension direction of each of the beads 90.

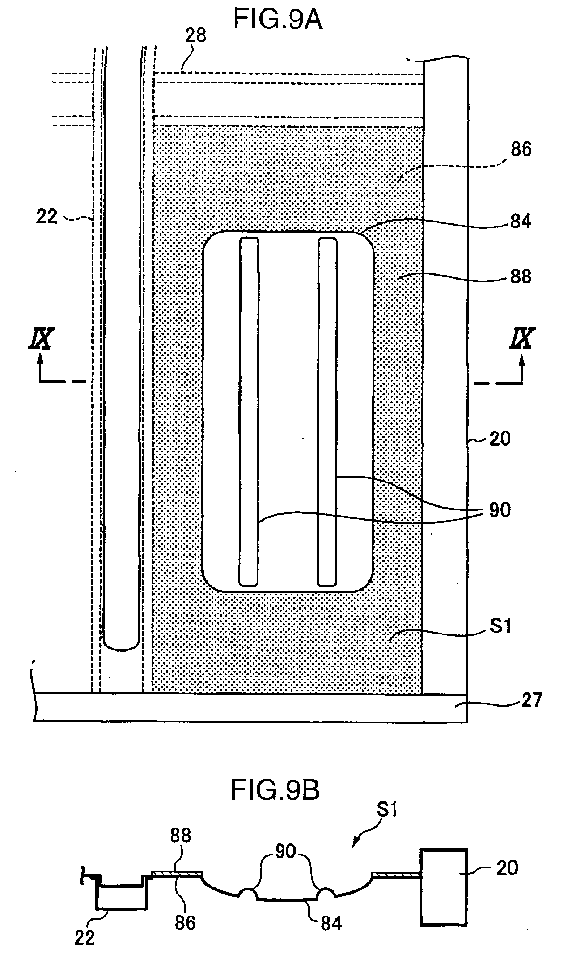

A floor panel structure according to a second embodiment of the present invention will be described below. With reference to FIGS. 1 and 9, the floor panel structure for the panel zones S1 and S2 will be described. FIG. 9 illustrates the panel zone S1 having the floor panel structure according to the second embodiment, wherein FIG 9A is an enlarged top plan view showing the panel zone S1, and FIG 9B is a lateral-sectional view taken along the line IX-IX in FIG. 9A.

As shown in FIG 9A, the panel zone S1 is surrounded by the frame members 20, 22, 27, 28 to have an oblong shape elongated in the longitudinal direction of the automobile body. As shown in FIG. 1, the panel zone S2 is surrounded by the frame members 22, 27, 28, 36 to have an oblong shape.

As shown in FIGS. 1 and 9A, each of the panel zones S1 and S2 is formed with a high-rigid portion 84, and a frame-shaped low-rigid portion 86 surrounding the entire circumference of the high-rigid portion 84. The high-rigid portion 84 is formed in an oblong shape approximately similar to the shape of each of the panel zones S1 and S2, and each of four edges of the high-rigid portion 84 is formed parallel to a corresponding one of the frame members 20, 22, 27, 28, 36. This makes it possible to prevent the rigidity of the low-rigid portion 86 from being increased so as to reliably obtain a rigidity difference between the high-rigid portion 84 and the low-rigid portion 86.

As shown in FIG. 9B, the high-rigid portion 84 is formed to protrude in the downward direction of the automobile body so as to have a dome-like sectional shape having a curved surface whose height is continuously changed. As shown in FIG. 9B, the low-rigid portion 86 is formed to be flat, and a damping member 88 is applied or attached onto approximately the entire region thereof, in the same manner as that in the panel zone S8. Although not illustrated, the high-rigid portion 84 of the panel zone S2 is formed in the same manner.

Further, as shown in FIGS. 1 and 9A, the high-rigid portion 84 in each of the panel zones S1 and S2 is formed with a concavoconvex element consisting of a plurality of beads 90 to increase the rigidity of the high-rigid portion 84 and prevent the low-order vibration mode (see FIG. 4) from occurring in the high-rigid portion 84 particularly at a frequency of 400 Hz or less, with further enhanced reliability. Specifically, the concavoconvex element is comprised of two beads 90, and the two beads 90 are formed to extend parallel to one another and linearly in parallel relation to each long edge of the high-rigid portion 84. More specifically, each of the beads 90 extends in a longitudinal direction of the high-rigid portion 84 in such a manner that it has one end located close to one short edge of the high-rigid portion 84 and the other end located the other short edge of the high-rigid portion 84. Further, as shown in FIG. 9B, each of the beads 90 is formed to protrude in a direction (upward direction of the automobile body) opposite to the downward direction in which the high-rigid portion 84 protrudes.

A function and effect of the floor panel structure according to the second embodiment will be described below.

As with the function and effect in the first embodiment, the high-rigid portion 84 and the low-rigid portion 86 can reduce vibrational energy in the panel zone so as to reduce acoustic radiation from the panel zone. Further, the damping member 88 can further reduce the vibrational energy in the panel zone.

As with the function and effect in the first embodiment, the concavoconvex element comprised of the beads 90 and formed in the high-rigid portion 84 makes it possible to reliably increase the rigidity of the high-rigid portion 84 while maintaining a height of the high-rigid portion 84 at a value capable of preventing interference with an exhaust pipe etc., and deterioration in feel when a passenger steps on the floor. In addition, the concavoconvex element makes it possible to prevent the aforementioned low-order mode vibration as shown in FIG. 4 from occurring in the high-rigid portion 84 itself at a relatively low frequency, for example, a frequency of 400 Hz or less.

As with the function and effect in the first embodiment, the concavoconvex element comprised of the beads 90 formed to protrude in an upward or downward direction of the automobile body to increase the rigidity of the high-rigid portion 84 makes it possible to reliably prevent an antinode of the low-order vibration mode from being formed in the high-rigid portion 84, in a simplified structure. Further, each of the beads 90 formed to protrude in a direction opposite to the protruding direction of the high-rigid portion 84 makes it possible to maximize a height of the high-rigid portion 84 without causing interference with an exhaust pipe or other component.

Further, the beads 90 in each of the panel zones S1 and S2 is formed to extend linearly in parallel relation to each long edge of the oblong-shaped high-rigid portion 84. This makes it possible to further reliably prevent occurrence of the low-order vibration mode as shown in FIG. 4. Specifically, each of the beads 90 can be formed to extend over a region having an antinode of the 2 x 1 mode as shown in FIG. 4E so as to suppress formation of the antinode. In addition, each of the beads 90 extends by a length approximately equal to each long edge of the high-rigid portion 84. This allows each of the beads 90 to reliably extend over the region having an antinode of the 2 x 1 mode so as to prevent occurrence of the low-order vibration mode as shown in FIG. 4.

In the above arrangement, each of the beads 90 may have one or both of the longitudinal ends in contact with one or both of the short edges of the high-rigid portion 84 to obtain the same effects. Further, the above effects can be obtained using the concavoconvex element comprised of the plurality of beads 90 regardless of the number thereof.

Further, a combination of the above beads 90 each extending in parallel relation to each long edge of the high-rigid portion 84 and a plurality of beads 90 extending from a central region of the high-rigid portion 84 in a radial pattern as in the panel zone S8 may be formed in a common high-rigid portion 84. In this case, the effects described in connection with the first embodiment can also be obtained.

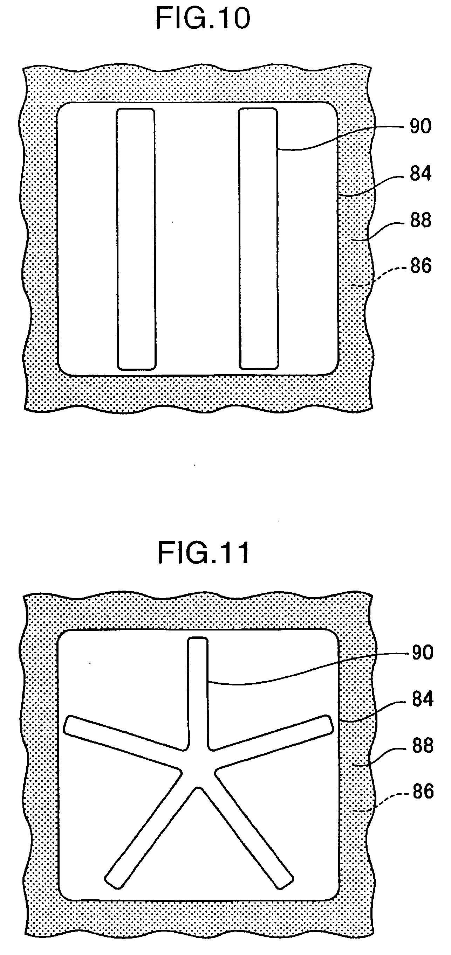

As shown in an example of modification illustrated in FIG. 10, the above concavoconvex element comprised of the beads 90 may be formed in a square-shaped high-rigid portion 84 to obtain the same effects. In particular, when a plurality of beads 90 are formed in a square-shaped high-rigid portion 84 to extend linearly in parallel relation to opposite edges of the square-shaped high-rigid portion 84, these beads 90 can extend over a region having an antinode of the low-order mode as shown in FIGS. 4A to 4D to suppress formation of the antinode. This makes it possible to increase the rigidity of the high-rigid portion 84 and prevent the low-order vibration mode from occurring in the high-rigid portion 84, with further enhanced reliability.

With reference to FIG 11, a concavoconvex element of a floor panel structure according to a third embodiment of the present invention will be described below. FIG 11 is a fragmentary enlarged top plan view showing a high-rigid portion of the floor panel structure according to the third embodiment.

As shown in FIG. 11, in the third embodiment, a plurality of beads 90 are formed to serve as the concavoconvex element, in such a manner that the beads 90 are connected to each other at approximately the center of the high-rigid portion 84, and each of the beads 90 extends linearly from approximately the center of the high-rigid portion 84 in a radial direction. Other fundamental structures are the same as those in the first embodiment, particularly in the point that at least one of the beads 90 appears in any cross-section taken along a linear line drawn in an arbitrary direction to get across the high-rigid portion 84.

The concavoconvex element comprised of the beads 90 in the third embodiment can provide the same effects as those in the first embodiment, particularly the effect of being able to increase the rigidity of the high-rigid portion 84 and prevent the low-order vibration mode (see FIG 4) from occurring in the high-rigid portion 84, with further enhanced reliability. As with the first embodiment, these effects can be obtained regardless of the number of the beads 90.

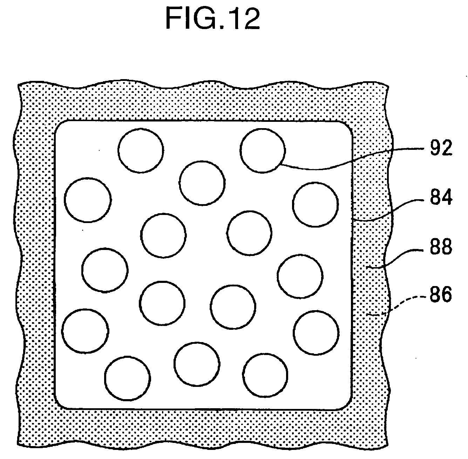

With reference to FIG. 12, a concavoconvex element of a floor panel structure according to a fourth embodiment of the present invention will be described below. FIG. 12 is a fragmentary enlarged top plan view showing a high-rigid portion 84 of the floor panel structure according to the fourth embodiment.

As shown in FIG. 12, in the third embodiment, the high-rigid portion 84 is formed with a plurality of dimples 92 serving as the concavoconvex element. Each of the dimples 92 is formed to have a circular shape in top plan view, and a sectionally circular arc shape protruding in a direction opposite to a protruding direction of the high-rigid portion 84. Further, the dimples 92 are arranged such that at least one of the dimples 92 appears in any cross-section taken along a linear line drawn in an arbitrary direction to get across the high-rigid portion 84. In other words, the dimples 92 are arranged in an irregular pattern so that any linear line drawn in an arbitrary direction to get across the high-rigid portion 84 intersects with at least one of the dimples 92. Alternatively, the dimples 92 may be arranged in a specific regular pattern, such as a zigzag pattern, so that at least one of the dimples 92 appears in any cross-section taken along a linear line drawn in an arbitrary direction to get across the high-rigid portion 84.

In this manner, the dimples 92 serving as the concavoconvex element can be formed in a region having an antinode of the low-order vibration mode as shown in FIG. 4 to suppress a vibrational strain. While the high-rigid portion 84 has a region where no dimple 92 is formed, it can be said that a specific vibration mode causing a bending around such a region hardly occurs because such a region is hardly formed in such a manner as to linearly continue from one edge to another edge of the high-rigid portion 84. Further, each of the dimples 92 protruding to form a sectionally circular arc shape has relatively high rigidity in itself. Thus, as with the aforementioned effects in the first embodiment, the floor panel structure according to the fourth embodiment can increase the rigidity of the high-rigid portion 84 and prevent the low-order vibration mode from occurring in the high-rigid portion 84, with further enhanced reliability.

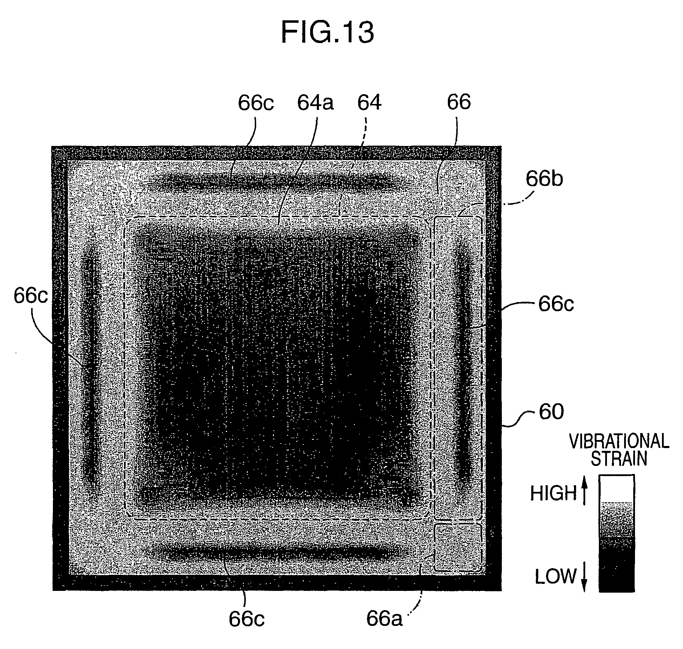

With reference to FIG. 13, an effect of concentration of vibrational energy in the low-rigid portion 66 in the experimental model illustrated in FIG. 2, which has been verified through a FEM analysis, will be described below. FIG. 13 shows a result of a vibration analysis of an analytical model prepared by forming the experimental model illustrated in FIG. 2 as a finite element model after the damping member 68 in the experimental model is removed. In FIG. 13, a region having a higher brightness means that the region has a larger strain.

As shown in FIG. 13, a vibrational stain becomes lower in the high-rigid portion 64 surrounded by the broken line in FIG. 13, and becomes larger in the surrounding low-rigid portion 66. This proves that vibrational energy is largely concentrated in the low-rigid portion 66. Further, the periphery 64a of the high-rigid portion 64, or a partial region 64a of the high-rigid portion 64 adjacent to the boundary between the high-rigid portion 64 and the low-rigid portion 66, also has a higher brightness or a larger vibrational strain. This analytical result shows that it is desirable to apply or attach the damping material (damping member) to the low-rigid portion 66 having concentration of vibrational energy in case of necessity. This analytical result also shows that the damping member may be applied or attached to have a contact with the periphery of the high-rigid portion so as to effectively obtain the aforementioned vibration reduction effect.

As seen in FIG. 13, among four comer regions 66a (only one corner region is indicated by the two-dot chain line) and four intermediate regions 66b (only one intermediate region is indicated by the two-dot chain line) between the corner regions 66a in the low-rigid portion 66, each of the intermediate regions 66b includes an area 66c having no or a small vibrational strain, and vibrational energy is not concentrated in the area 66c. This area 66c having no concentration of vibrational energy is generated at a position spaced apart from the frame member 60 and the high-rigid portion 64 and closer to the frame member 60 than the high-rigid portion 64. Further, the area 66c extends linearly in parallel relation to a corresponding one of four edges of the high-rigid portion 64, and has a length less than the edge of the high-rigid portion 64.

Vibrational energy is converted to heat energy according to deformation of the damping member arising from vibrational strain in the floor panel section. However, if the damping member is applied or attached to the low-rigid portion 66 in both an area having a large vibrational strain due to sufficient concentration of vibrational energy and an area (66c) having no or a small vibrational strain due to insufficient concentration of vibrational energy, deformation in the damping member applied or attached to the area having a large vibrational strain will be restricted. Specifically, the damping member applied or attached to the area having no or a small vibrational strain has no or small deformation to cause difficulty in deforming the damping member applied or attached to the area having a large vibrational strain so as to reduce a vibrational-energy reduction effect of the entire damping member.

In fifth to seventh embodiments of the present invention, a vibration reduction structure is provided in the panel zones S1 to S4, S7, S8, S10 in consideration of the above analytical result.

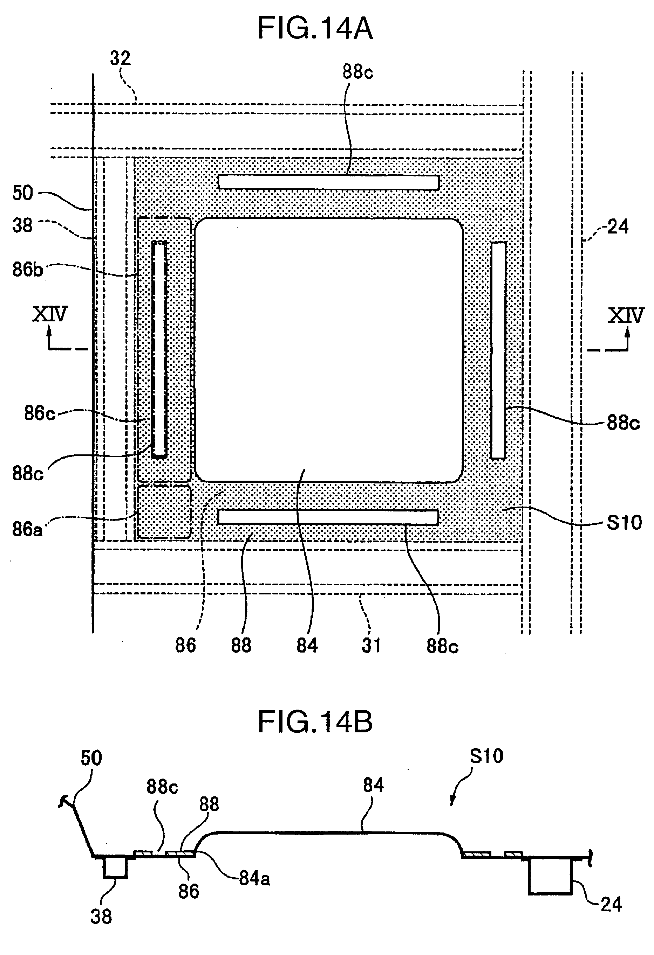

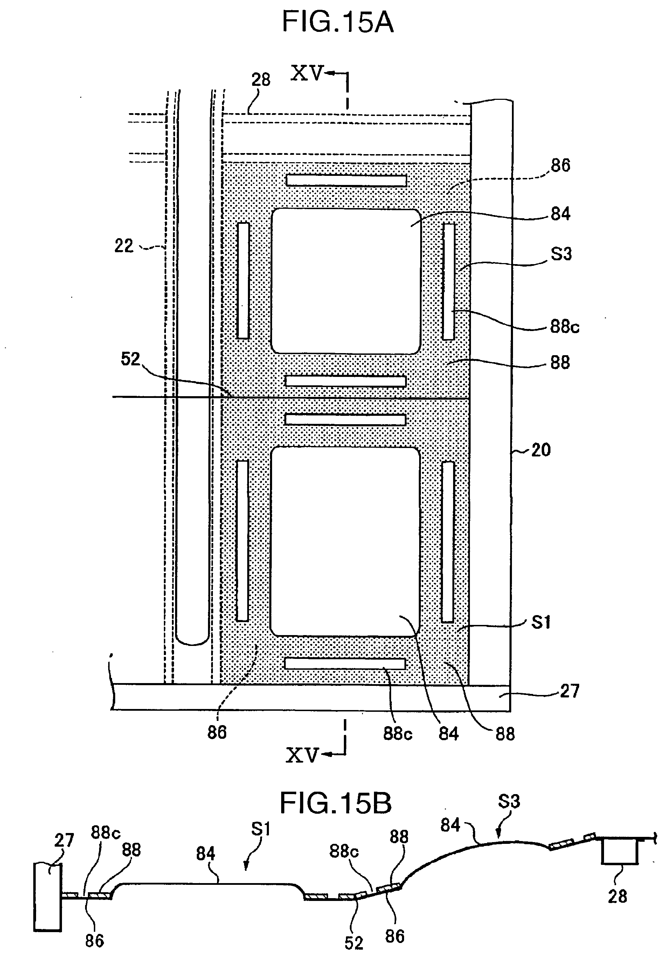

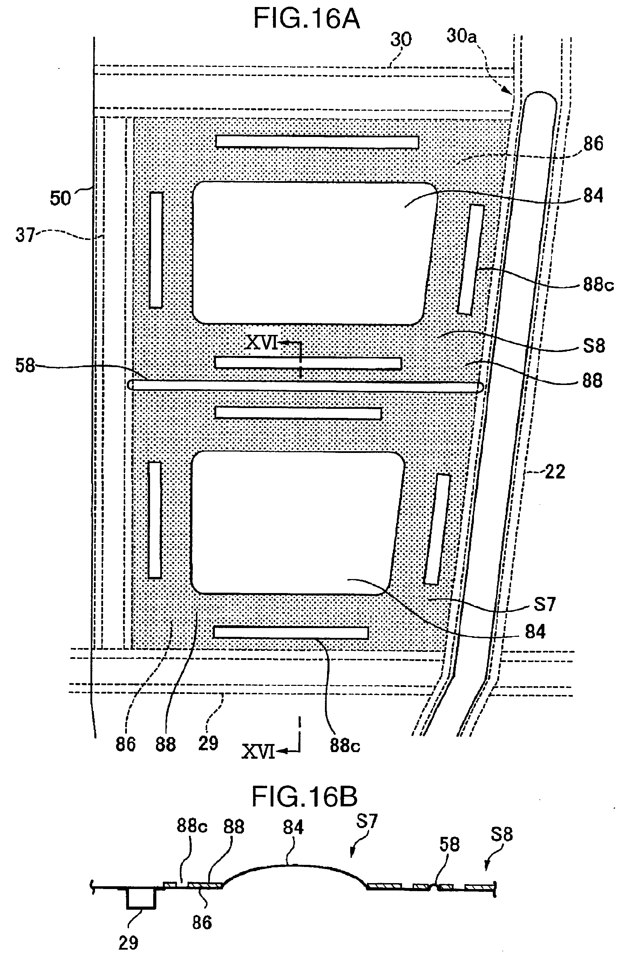

With reference to FIGS. 14 to 16, the fifth to seventh embodiment of the present invention will be specifically described below. FIG. 14 illustrates the panel zone S10 having a floor panel structure according to the fifth embodiment, wherein FIG. 14A is an enlarged top plan view showing the panel zone S10, and FIG. 14B is a lateral-sectional view taken along the line XIV-XIV in FIG. 14A. FIG. 15 illustrates the panel zones S1 and S3 having a floor panel structure according to the sixth embodiment, wherein FIG. 15A is an enlarged top plan view showing the panel zones S1 and S3, and FIG. 15B is a lateral-sectional view taken along the line XV-XV in FIG. 15A. FIG. 16 illustrates the panel zones S7 and S8 having a floor panel structure according to the seventh embodiment, wherein FIG 16A is an enlarged top plan view showing the panel zones S7 and S8, and FIG. 16B is a lateral-sectional view taken along the line XVI-XVI in FIG. 16A.

A fundamental configuration and arrangement of the vibration reduction structure provided in each of the panel zones S1 to S4, S7, S8, S10 are the same. Thus, the following description will be made primarily about the panel zone 10 and then about the panel zones S1 to S4, S7, S8 with a focus on a difference from the panel zone 10.

With reference to FIG. 14, the vibration reduction structure in the fifth embodiment for the panel zone S10 will be described.

As shown in FIG. 15A, the panel zone S10 is surrounded and defined by the frame members 24, 31, 32, 38. Each of the frame members 24, 31, 32, 38 extends linearly to form a rectangular shape where opposed ones of the frame members extend parallel to one another.

This panel zone S10 comprises an approximately rectangular-shaped high-rigid portion 84 formed in a central region thereof, and a frame-shaped low-rigid portion 86 surrounding the entire circumference of the high-rigid portion 84. The high-rigid portion 84 has four edges extending linearly and defining a boundary with the low-rigid portion 86.

As shown in FIG. 14B, the high-rigid portion 84 is formed by deforming a floor panel itself in such a manner as to protrude in the upward direction of the automobile body, so as to allow the high-rigid portion 84 to be increased in rigidity. More specifically, the high-rigid portion 84 has a sectional shape where a central region is approximately flat, and a peripheral region extends upward from the low-rigid portion 86 at a discontinuous angle to form a curved shape. Alternatively, the high-rigid portion 84 may be formed to protrude in a downward direction of the automobile body. In contrast, the low-rigid portion 86 is formed to be approximately flat.

Further, as shown in FIGS. 14A and 14B, a damping member 88 is applied or attached onto approximately the entire region of the low-rigid portion 86. In this embodiment, this damping member consists of an asphalt-based damping material. The damping member 88 is formed in a sheet shape which has a rectangular opening along an outer periphery (boundary with the low-rigid portion 86) of the high-rigid portion 84 and extends to form a frame shape in conformity to the outer periphery of the high-rigid portion 84, and attached onto the low-rigid portion 86. The damping member 88 may be any other suitable damping material, such as an application or coating-type damping material.

The damping member 88 has four cutout portions 88c. Each of the cutout portions 88c is formed in a shape and at a position in conformity to those of a corresponding one of the aforementioned areas 66c having no concentration of vibrational energy. As shown in FIG. 14A, in the low-rigid portion 66 of the panel region S10, vibrational energy is concentrated in four corner regions 86a (only one corner region is indicated by the two-dot chain line) and four intermediate regions 86b (only one intermediate region is indicated by the two-dot chain line) between the corner regions 86a except for respective areas 86c in the intermediate regions 86b, or vibrational energy is not concentrated in each of the areas 86c. Thus, in this embodiment, the damping member is not applied or attached to the areas 86c but only to the remaining region having no concentration of vibrational energy, so as to allow the vibrational energy to be effectively reduced.

Specifically, each of the cutout portions 88c is formed at a position spaced apart from a corresponding one of the frame members 24, 31, 32, 38 and the high-rigid portion 84 and closer to the frame member than the high-rigid portion 84. Further, each of the cutout portions 88c is formed to extend linearly in parallel relation the a corresponding one of the frame members 24, 31, 32, 38 and a corresponding one of four edges (defining the boundary with the low-rigid portion 86) of the high-rigid portion 84, and to have a length less than the edge of the high-rigid portion 84.

This cutout portions 88c allows the damping member 88 to be applied or attached only to the region having concentration of vibrational energy, or only to the corner regions 86c and the intermediate regions 86b except for the areas 86c. In particular, no cutout portion 88c is formed in the corner regions 86c having concentration of vibrational energy.

As shown in FIG. 14B, the damping member 88 is applied or attached in such a manner as to have a contact with a periphery 84a of the high-rigid portion 84 to reduce vibrational energy in periphery 84a of the high-rigid portion 84. The damping member 88 may be any other suitable damping material, such as an application or coating-type damping material. For example, in use of a coating-type damping material, the coating-type damping material is applied to approximately the entire region of the low-rigid portion 86 while avoiding applying the damping material to a region having no concentration of vibrational energy so as to form the cutout portions therein.

With reference to FIGS. 1 and 15, the vibration reduction structure in the sixth embodiment for the panel zones S1 to S4 will be described.

As shown in FIG. 15A, the panel zones S1 and S3 has a common bent portion 52, and the panel zone S1 is surrounded by this bent portion 52, and the frame members 20, 22, 27, to have a rectangular shape. As shown in FIG 1, each of the panel zones S1, S2 is surrounded by the frame members 22, 27, 28, 30 and the bent portion 52, and formed in the same manner as that in each of the panel zones S1, S3. The bent portion 52 is formed by linearly bending the first floor panel section 2 to serve as a vibration regulation portion for regulating vibration in such a manner as to prevent respective vibrations occurring in the panel zones S3, S4 from interfering with one another.

As shown in FIGS. 1 and 15A, as with the panel zone S10, each of the panel zones S1 to S4 is formed with an approximately rectangular-shaped high-rigid portion 84 and a frame-shaped low-rigid portion 86 having a flat shape in section. Among the high-rigid portions 84 formed in the panel zones S1 to S4, the high-rigid portion 84 of the panel zone S3 is formed to have a dome-like sectional shape having a curved surface whose height is continuously changed. Although not illustrated, the high-rigid portion 84 of the panel zone S4 is formed in the same manner.

In each of the panel zones S1 to S4, a damping member 88 having four cutout portions 88c is applied or attached to approximately the entire region of the low-rigid portion 86. In each of the panel zones S1 to S4, each of the cutout portions 88c is formed in a shape and at a position in conformity to those of a corresponding one of the aforementioned areas having no concentration of vibrational energy, so as to effectively reduce vibrational energy in each of the panel zones S1 to S4.

While each of the panel zones S1 to S4 has one edge in contact with the bent portion 52, the bent portion 52 is linearly bent to have relatively high rigidity, and therefore an area having no concentration of vibrational is generated at a position spaced apart from the bent portion 52 by a given distance. Thus, as with the panel zone S10, the cutout portion 88c can be formed in conformity to this area to effectively reduce vibrational energy in each of the panel zones S1 to S4.

As described above in connection with the panel zones S1 to S4, the vibration reduction structure in this embodiment can reduce vibrational energy even in a panel zone surrounded by the frame members and the bent portion 52 serving as the vibration regulation portion.

With reference to FIG. 16, the vibration reduction structure in the seventh embodiment for the panel zones S7 and S8 will be described.

As shown in FIG. 16A, the panel zones S7, S8 has a common bead portion 58, and the panel zone S7 is surrounded and defined by this bead portion 58, and the frame members 22, 29, 30, 37. In each of the panel zones S1 and S3, the frame member 22 and the frame member 37 are not disposed in parallel relation to one another, and therefore each of the panel zones S7, S8 has a trapezoidal shape. The bead portion 58 serves as a vibration regulation portion for regulating vibration in such a manner as to prevent respective vibrations occurring in the panel zone S7 and the adjacent panel zone S8 from interfering with one another.

As shown in FIG. 16A, each of the panel zones S7, S8 is formed with a high-rigid portion 84 and a low-rigid portion 86. The high-rigid portion 84 is formed to have four edges each extending in parallel relation to a corresponding one of the frame members 22, 29, 30, 50 and the bead portion 58, and to have a trapezoidal shape approximately similar to the shape of each of the panel zones S7, S8. The low-rigid portion 86 is formed in a frame-like shape surrounding the entire circumference of the high-rigid portion 84. Thus, in the panel zones S7, S8, each of four edges of high-rigid portion 84 is formed to extend in parallel relation to a corresponding one of the frame members 22, 29, 30, 50 and the bead portion 58 to prevent the rigidity of the surrounding low-rigid portion 86 from being increased so as to allow vibrational energy to be reliably concentrated in the low-rigid portion 86.

As shown in FIG. 16B, the high-rigid portion 84 of the panel zone S7 is formed to have a dome-like sectional shape having a curved surface whose height is continuously changed. The low-rigid portion 86 is formed, but not shown, in a flat shape as with the panel zone S10.

In each of the panel zones S7, S8, a damping member 88 having four cutout portions 88c is applied or attached to approximately the entire region of the low-rigid portion 86. In each of the panel zones S7, S8, each of the cutout portions 88c is formed at a position and in a shape in conformity to those of a corresponding one of the aforementioned areas having no concentration of vibrational energy, so as to effectively reduce vibrational energy in each of the panel zones S7, S8.

While each of the panel zones S7, S8 has one edge in contact with the bead portion 58, the bead portion 58 has relatively high rigidity, and therefore an area having no concentration of vibrational is generated at a position spaced apart from the bead portion 58 by a given distance, as with each of the frame members. Thus, as with the panel zone S10, the cutout portion 88c can be formed in conformity to this area to effectively reduce vibrational energy in each of the panel zones S7, S8.

Further, each of the area having no concentration of vibrational extends in parallel relation to a corresponding one of the frame members. Thus, even if the panel zone has a quadrangular shape other than a rectangular shape (trapezoidal shape in the panel zones S7, S8), vibrational energy can be effectively reduced by forming the cutout portions in parallel relation to a corresponding one of the frame members and the bead portion 58.

As described above in connection with the panel zones S7, S8, the vibration reduction structure in this embodiment can reduce vibrational energy even in a panel zone surrounded by the frame members and the bead portion 58 serving as the vibration regulation portion. Further, even if the panel zone has a quadrangular shape other than a rectangular shape, vibrational energy can be effectively reduced by forming the cutout portions in the damping member in conformity to the areas having no concentration of vibrational energy in the low-rigid portion 86.

A function and effect of the floor panel structure according to each of the fifth to seventh embodiments will be described below.

Each of the panel zones S1 to S7, S8, S10 in these embodiments is provided with the high-rigid portion 84 and the low-rigid portion 86 formed around the high-rigid portion 84. Thus, vibrational energy is concentrated in the low-rigid portion 86 according to a rigidity difference between the high-rigid portion 84 and the low-rigid portion 86. Then, the damping member 88 applied or attached to the low-rigid portion 86 is deformed in conjunction with strain in the low-rigid portion 86 to convert the vibrational energy concentrated the low-rigid portion 86 into hear energy so as to reduce the vibrational energy in each of the panel zones. Thus, acoustic radiation from each of the panel zones is reduced.

In particular, the damping member 88 formed with the cutout portions 88c in conformity to the areas 86c having no concentration of vibrational energy in the low-rigid portion 86 can further effectively reduce vibrational energy. That is, the damping member is applied or attached to the region having a large vibrational strain while avoiding applying or attaching the damping member to the region having no or small vibrational strain due to no concentration of vibrational energy, so as to prevent the aforementioned problem about restriction on deformation in the region having a large vibrational strain. The damping member applied or attached only to the region having a large vibrational strain can further effectively reduce the vibrational energy. Further, the cutout portions can facilitate reduction in weight of the damping material.

In sum, the present invention provides a floor panel structure for an automobile body, which comprises a floor panel joined to a plurality of frame members extending in longitudinal and lateral directions of the automobile body so as to make up an automobile floor. At least a part of the floor panel has a panel zone surrounded by the frame members. The panel zone includes a high-rigid portion formed by deforming a central region thereof to protrude upward or downward, and a low-rigid portion formed around the high-rigid portion. The high-rigid portion is formed with a concavoconvex element.

In the above floor panel structure of the present invention, the panel zone of the floor panel is provided with the high-rigid portion formed by deforming a central region thereof to protrude upward or downward, and the low-rigid portion formed around the high-rigid portion. Thus, according to a rigidity difference between the high-rigid portion and the low-rigid portion, vibrational energy is concentrated in the low-rigid portion to provide a large vibrational strain in the low-rigid portion. In the low-rigid portion, based on a damping capacity of a material itself constituting the floor panel, vibrational energy is converted to hear energy, so that the vibrational energy in the floor panel is reduced to suppress acoustic radiation from the floor panel. The vibrational energy may be further reduced, for example, by applying or attaching a damping member (damping material) to the low-rigid portion.

In the above floor panel structure of the present invention, the concavoconvex element formed in the high-rigid portion makes it possible to effectively increase the rigidity of the high-rigid portion without excessively increasing a height of the high-rigid portion. That is, the rigidity of the high-rigid portion can be increased without interference with an exhaust pipe and other component disposed under or above the floor panel and deterioration in feel when a passenger steps on the floor. Thus, the rigidity difference can be reliably obtained to reduce acoustic radiation from the floor panel. In addition, the increased rigidity by means of the concavoconvex element makes it possible to suppress occurrence of low-order mode vibration and acoustic radiation arising from the low-order mode vibration. Thus, the risk of occurrence of low-order mode vibration at a relatively low frequency, for example, of 400 Hz or less can be reduced to prevent increase in road noise. While the low-order mode vibration is apt to occur particularly when the high-rigid portion has a relatively large area, the concavoconvex element formed in the high-rigid portion makes it possible to suppress occurrence of the low-order mode vibration. Based on the above functions, the floor panel structure of the present invention can effectively reduce acoustic radiation from the floor panel to suppress undesirable noise and vibration in a passenger compartment.

In the floor panel structure of the present invention, the concavoconvex element may be formed such that at least a part of the concavoconvex element appears in any cross section taken along a linear line drawn in an arbitrary direction to get across the high-rigid portion.

In the floor panel structure having this feature, at least a part of the concavoconvex element appears in any cross section taken along a linear line drawn in an arbitrary direction to get across the high-rigid portion. This makes it possible to prevent occurrence of the low-order vibration mode in the high-rigid portion with further enhanced reliability. Specifically, this concavoconvex element is formed to reliably extend across a region having antinode of the low-order vibration mode as shown in FIG. 4 (region to be deformed due to vibration) to suppress occurrence of such a vibration antinode so as to prevent increase in undesirable noise and vibration in a passenger compartment. Further, the concavoconvex element formed in the high-rigid portion makes it possible to increase the rigidity of the high-rigid portion without excessively increasing a height thereof.

In the floor panel structure of the present invention, the concavoconvex element may comprise a plurality of beads.

In the floor panel structure having this feature, the plurality of beads serving as the concavoconvex element make it possible to increase the rigidity of the high-rigid portion in a simplified structure. In addition, based on relatively high rigidity of the bead itself, the high-rigid portion can avoid occurrence of resonance in at a low frequency, for example, of 400 Hz or less to reliable prevent occurrence of the low-order vibration mode.

In this floor panel structure, the plurality of beads may be formed to extend from a central region of the high-rigid portion in a radial pattern.

In this case, the beads extending from a central region of the high-rigid portion in a radial pattern make it possible to increase the rigidity of the high-rigid portion in a simplified structure and prevent occurrence of the low-order vibration mode, with further enhanced reliability. In addition, the beads extending from a central region of the high-rigid portion in a radial pattern can reduce the risk of bending of the high-rigid portion at a specific position to further reliably prevent formation of an antinode of the low-order vibration mode.

In the above floor panel structure, the plurality of beads may be arranged such that an axis of one of the beads intersects with an axis of an adjacent one of the beads.

In this case, the plurality of beads arranged such that an axis of one of the beads intersects with an axis of an adjacent one of the beads make it possible to increase the rigidity of the entire high-rigid portion in a simplified structure and prevent occurrence of the low-order vibration mode, with further enhanced reliability. That is, the plurality of beads arranged such that an axis of one of the beads intersects with an axis of an adjacent one of the beads can reduce the risk of bending of the high-rigid portion at a specific position to further reliably prevent formation of an antinode of the low-order vibration mode. In addition, this arrangement can facilitate forming the beads in such a manner that at least one of the beads appears in any cross section taken along a linear line drawn in an arbitrary direction to get across the high-rigid portion.

In the above floor panel structure, each of the plurality of beads may be arranged to extend from a central region of the high-rigid portion in a direction inclined relative to a radial direction of the high-rigid portion by a given angle

In this case, the plurality of beads each arranged to extend from a central region of the high-rigid portion in a direction inclined relative to a radial direction of the high-rigid portion by a given angle make it possible to increase the rigidity of the entire high-rigid portion in a simplified structure and prevent occurrence of the low-order vibration mode, with further enhanced reliability. That is, the plurality of beads each arranged to extend from a central region of the high-rigid portion in a direction inclined relative to a radial direction of the high-rigid portion by a given angle can reduce the risk of bending of the high-rigid portion at a specific position to further reliably prevent formation of an antinode of the low-order vibration mode. In addition, this arrangement can facilitate forming the beads in such a manner that at least one of the beads appears in any cross section taken along a linear line drawn in an arbitrary direction to get across the high-rigid portion.

In the above floor panel structure, the plurality of beads may be arranged such that one of the beads has one end located close to or in contact with a side surface of an adjacent one of the beads.

In this case, the plurality of beads arranged such that one of the beads has one end located close to or in contact with a side surface of an adjacent one of the beads make it possible to increase the rigidity of the entire high-rigid portion in a simplified structure and prevent occurrence of the low-order vibration mode, with further enhanced reliability. That is, the plurality of beads arranged such that one of the beads has one end located close to or in contact with a side surface of an adjacent one of the beads can reduce the risk of bending of the high-rigid portion at a specific position to further reliably prevent formation of an antinode of the low-order vibration mode. In addition, this arrangement can facilitate forming the beads in such a manner that at least one of the beads appears in any cross section taken along a linear line drawn in an arbitrary direction to get across the high-rigid portion.

In the floor panel structure of the present invention, the concavoconvex element may comprise a plurality of dimples.

In the floor panel structure having this feature, the plurality of dimples serving as the concavoconvex element make it possible to increase the rigidity of the high-rigid portion in a simplified structure. In addition, based on relatively high rigidity of each of the plurality of dimples themselves, the high-rigid portion can avoid occurrence of resonance in at a low frequency, for example, of 400 Hz or less to reliable prevent occurrence of the low-order vibration mode.

In the above floor panel structure, the plurality of dimples may be arranged in an irregular pattern.

In this case, the plurality of dimples arranged in an irregular pattern make it possible to reduce the risk of bending of the high-rigid portion at a specific position so as to increase the rigidity of the high-rigid portion and prevent formation of an antinode of the low-order vibration mode, with further enhanced reliability. In addition, this arrangement can facilitate forming the dimples in such a manner that at least one of the dimples appears in any cross section taken along a linear line drawn in an arbitrary direction to get across the high-rigid portion.

In the floor panel structure of the present invention, the concavoconvex element may comprise a plurality of beads extending linearly in parallel relation to each other.

In this case, the plurality of beads extending linearly in parallel relation to each other to serve as the concavoconvex element make it possible to increase the rigidity of the high-rigid portion in a simplified structure. In addition, based on relatively high-rigidity of the bead itself, and the plurality of beads extending linearly in parallel relation to each other, the high-rigid portion becomes hard to be bent in each extension direction of the beads to further reliably prevent occurrence of the low-order vibration mode.

In this floor panel structure, the high-rigid portion may be formed in an oblong shape, and each of the plurality of beads may be arranged to extend in parallel relation to each long edge of the oblong-shaped high-rigid portion.

In this case, each of the plurality of beads extending linearly in parallel relation to each other extends in parallel relation to each long edge of the oblong-shaped high-rigid portion. Thus, these beads extend across a region having an antinode, for example, of the 2 x 1 mode as shown in FIG. 4E, so as to prevent the 2 x 1 mode vibration from occurring in a longitudinal direction of the oblong-shaped high-rigid portion with further enhanced reliability.

In this floor panel structure, each of the plurality of beads may have a length approximately equal to a length of each long edge of the oblong-shaped high-rigid portion.

In this case, the plurality of beads each having a length approximately equal to a length of each long edge of the oblong-shaped high-rigid portion makes it possible to increase the rigidity of the high-rigid portion and prevent the 2 x 1 mode vibration from occurring in a longitudinal direction of the oblong-shaped high-rigid portion, with further enhanced reliability.

In the floor panel structure of the present invention, the high-rigid portion and the concavoconvex element may be formed to protrude, respectively, upward and downward or to protrude, respectively, downward and upward.

In this case, the concavoconvex element is formed to protrude in a direction opposite to a protruding direction of the high-rigid portion. That is, the concavoconvex element is formed within an inner space of the high-rigid portion. This makes it possible to arrange the concavoconvex element within an inner space of the high-rigid portion while preventing interference between the concavoconvex element and an exhaust pipe or other component, and maximize a height of the high-rigid portion without causing interference with an exhaust pipe or other component disposed under or above the floor panel sections. Thus, the rigidity of the high-rigid portion can be maximally increased without interference with an exhaust pipe or other component.

In order to achieve the above object, preferably, a damping member (damping material) is added to the low-rigid portion, and the damping member is formed with a cutout portion extending along at least a specific one of the frame members at a position spaced apart from the specific frame member.

In this floor panel structure, the panel zone of the floor panel is provided with the high-rigid portion formed by deforming a central region thereof to protrude upward or downward, and the low-rigid portion formed around the high-rigid portion. Thus, according to a rigidity difference between the high-rigid portion and the low-rigid portion, vibrational energy is concentrated in the low-rigid portion to provide a large vibrational strain in the low-rigid portion. Then, the damping member added to the low-rigid portion is deformed in conjunction with a strain of the low-rigid portion to induce conversion of vibrational energy concentrated in the low-rigid portion to hear energy, so as to reduce the vibrational energy in the floor panel. In this manner, the damping member added to the low-rigid portion makes it possible to effectively reduce vibration so as to suppress acoustic radiation from the floor panel while reducing a weight of the damping member.

Heretofore, it has been believed that a larger area of a damping material in a surface of a panel zone provides a larger vibration damping effect. The inventors found that a low-rigid portion formed around a high-rigid portion formed in a central region of the panel zone includes an area having no concentration of vibration energy and a lower vibrational strain, and the area extends along a frame member at a position spaced apart from the frame member. The inventors also found that, if a damping member added to the area having a lower vibrational strain, the area having no deformation causes difficulty in deforming an adjacent region having a larger vibrational strain so as to reduce a vibration-energy reduction effect of the entire damping member. Based on this standpoint, in order to prevent a damping member from being added to an area having no concentration of vibration energy and a lower vibrational strain, the cutout portion extending along a frame member at a position spaced apart from the frame member is formed in the damping member at a position corresponding to the area. Thus, as mentioned above, this cutout portion can prevent the area having a larger strain from being restricted in deformation. In addition, the cutout portion can facilitate reduction in weight of the damping material.

In this floor panel structure, the specific frame member may be formed in a linear shape, and the cutout portion may be formed to extend in parallel relation to the linear-shaped frame member.

The inventors further found that when a frame member is formed in a linear shape or to extend linearly, the area having no concentration of vibration energy and a lower vibrational strain is generated to extend in parallel relation to the frame. Thus, the cutout portion formed to extend in parallel relation to the linear-shaped frame member as in this floor panel structure makes it possible to further reliably obtain the vibration-energy reduction effect.

In the above floor panel structure, the high-rigid portion may be formed in an approximately quadrangular shape (or rectangular shape), and the cutout portion may be formed to extend in parallel relation to one edge of the approximately quadrangular-shaped high-rigid portion and have a length less than a length of the edge.

The inventors further found that when the high-rigid portion is formed in an approximately quadrangular shape in top plan view, the area having no concentration of vibration energy and a lower vibrational strain is generated to extend in parallel relation to one edge of the approximately quadrangular-shaped high-rigid portion and have a length less than a length of the edge. Thus, the cutout portion formed to extend in parallel relation to one edge of the approximately quadrangular-shaped high-rigid portion and have a length less than a length of the edge as in this floor panel structure makes it possible to further reliably obtain the vibration-energy reduction effect.

In the above floor panel structure, the low-rigid portion may have a corner region devoid of the cutout portion.

The inventors further found that the area having no concentration of vibration energy and a lower vibrational strain is not generated in a corner region of the low-rigid portion. Thus, the low-rigid portion having a corner region devoid of the cutout portion as in this floor panel structure makes it possible to avoid deterioration in the vibration-energy reduction effect.

As mentioned above, the automobile body floor panel structure of the present invention can effectively reduce vibrational energy of a floor panel arising from vibration transmitted from a frame member of an automobile body so as to reduce acoustic radiation from the floor panel.

Although the present invention has been described in terms of specific exemplary embodiments, it will be appreciated that various modifications and alterations might be made by those skilled in the art without departing from the spirit and scope of the invention as set forth in the following claims.

## Claims

1. A floor panel structure for an automobile body, comprising
a floor panel (2, 4, 6, 12) joined to a plurality of frame members (22, 24, 27 - 32) extending in longitudinal and lateral directions of the automobile body so as to make up an automobile floor,
wherein at least a part of said floor panel (2,4,6,12) including:
a panel zone (S1, S2, S4, S5, S6, S8) surrounded by said frame members, said panel zone having:
a high-rigid portion (64, 74, 84) protruding upward or downward to form a central region of said panel zone, said high-rigid portion being formed with a concavoconvex element (90, 92), and
a low-rigid portion (66, 86) formed around said high-rigid portion.

2. The floor panel structure as defined in claim 1, wherein said concavoconvex element (90, 92) is formed such that at least a part of said concavoconvex element appears in any cross section taken along a linear line drawn in an arbitrary direction across said high-rigid portion (64, 74, 84).

3. The floor panel structure as defined in claim 1 or 2, wherein said concavoconvex element (90, 92) comprises a plurality of beads (90).

4. The floor panel structure as defined in claim 3, wherein said plurality of beads (90) are formed to extend from a central region of said high-rigid portion (84) in a radial pattern.

5. The floor panel structure as defined in claim 3 or 4, wherein said plurality of beads (90) are arranged such that an axis of one of said beads intersects with an axis of an adjacent one of said beads.

6. The floor panel structure as defined in any one of claims 3 to 5, wherein each of said plurality of beads (90) are arranged to extend from a central region of said high-rigid portion (84) in a direction inclined relative to a radial direction of said high-rigid portion by a given angle

7. The floor panel structure as defined in any one of claims 3 to 6, wherein said plurality of beads (90) are arranged such that one of said beads has one end located close to or in contact with a side surface of an adjacent one of said beads.

8. The floor panel structure as defined in one of the preceding claims, wherein said concavoconvex element (90) comprises a plurality of dimples (92).

9. The floor panel structure as defined in claim 8, wherein said plurality of dimples (92) are arranged in an irregular pattern.

10. The floor panel structure as defined in one of the preceding claims, wherein said concavoconvex element comprises a plurality of beads (90) extending linearly in parallel relation to each other.

11. The floor panel structure as defined in claim 10, wherein said high-rigid portion is formed in an oblong shape, and each of said plurality of beads is arranged to extend in parallel relation to each long edge of said oblong-shaped high-rigid portion.

12. The floor panel structure as defined in claim 11, wherein each of said plurality of beads has a length approximately equal to a length of each long edge of said oblong-shaped high-rigid portion.

13. The floor panel structure as defined in any one of claims 1 to 12, wherein said high-rigid portion and said concavoconvex element are formed to protrude, respectively, upward and downward or to protrude, respectively, downward and upward.

14. The floor panel structure as defined in one of the preceding claims, further comprising a damping member (88) added to said low-rigid portion, said damping member (88) being formed with a cutout portion (88c) extending along at least a specific one of the frame members at a position spaced apart from said specific frame member.

15. The floor panel structure as defined in claim 14, wherein said specific frame member is formed in a linear shape, and said cutout portion is formed to extend in parallel relation to said linear-shaped frame member.

16. The floor panel structure as defined in claim 14 or 15, wherein said high-rigid portion is formed in an approximately quadrangular shape in top plan view, and said cutout portion is formed to extend in parallel relation to one edge of said approximately quadrangular-shaped high-rigid portion, and have a length less than a length of said edge.

17. The floor panel structure as defined in any one of claims 14 to 16, wherein said low-rigid portion has a corner region (86a) devoid of said cutout portion (88c).
